# EUROPEAN PATENT APPLICATION

(11) **EP 4 797 067 A1**
(43) Date of publication of application: **26.08.2026**
(21) Application number: 26160017.5
(22) Date of filing: 23.02.2026
(51) Int. Cl.: G06F 3/12, B41J 3/407, G06K 15/02

(54) **PRINT SYSTEM, PRINT APPARATUS, PRINTING METHOD, AND NON-TRANSITORY COMPUTER- READABLE STORAGE MEDIUM STORING PROGRAM**

(30) Priority: 25.02.2025 JP 2025027641
(71) Applicant: Seiko Epson Corporation, Tokyo 160-8801 (JP)
(72) Inventor: MITSUI, Yoichi, Suwa-shi, 392-8502 (JP)
(74) Representative: Lewis Silkin LLP

(57) **Abstract**

A print system is a print system including a print apparatus and an information processing apparatus, in which the print apparatus includes a conveying portion, a print unit, and a print control unit, performs printing on a product region by printing a product image on a label based on a print job, and performs printing on an information region to be aligned with the product region in a conveying direction by printing a character string on the label based on the print job, the information processing apparatus includes an information control unit, the print job includes product image data indicating the product image, cut data indicating a cut frame, and character string data indicating the character string, and the print control unit or the information control unit determines whether the character string fits in the cut frame based on the print job, and when the character string does not fit in the cut frame, changes a print form of the character string so as to fit in the cut frame.

## Description

The present application is based on, and claims priority from JP Application Serial Number 2025-027641, filed February 25, 2025, the disclosure of which is hereby incorporated by reference herein in its entirety.

### BACKGROUND

### 1. Technical Field

The present disclosure relates to a print system, a print apparatus, a printing method, and a non-transitory computer-readable storage medium storing a program.

### 2. Related Art

JP-A-2024-61376 describes a print apparatus that prints a product image on a label including a mount and a sticker sheet, and a processing apparatus that makes a notch so as to form a cut frame in the label after printing. The print apparatus is configured to print a character string in a margin portion different from a portion of the label on which the product image is printed. The character string indicates information referred to during processing, information referred to during product delivery, and the like. After making the notch in the label, the processing apparatus performs so-called scrapping in which the sticker sheet is peeled off from the mount so as to leave a portion surrounded by the cut frame. Therefore, the print apparatus prints the character string to correspond to the portion where the cut frame is formed, in order to leave the character string on the label.

JP-A-2024-61376 is an example of the related art.

In the print apparatus described in JP-A-2024-61376, when the character string does not fit in the cut frame, the character string is divided and printed by increasing a margin portion. Therefore, when the character string does not fit in the cut frame, there is a problem that a consumption amount of the label increases.

### SUMMARY

According to an aspect of the present disclosure, there is provided a print system including: a print apparatus configured to print an image on a label having a mount and a sticker sheet attached to the mount; and an information processing apparatus configured to process information related to the print apparatus, in which the print apparatus includes a conveying portion configured to convey the label in a conveying direction, a print unit configured to print an image on the label, and a print control unit configured to control the print unit based on a print job, a product region is subjected to printing by printing a product image on the label based on the print job, an information region is subjected to printing to be aligned with the product region in the conveying direction by printing a character string on the label based on the print job, the information processing apparatus includes an information control unit configured to transmit the print job to the print apparatus, the print job includes product image data indicating the product image, cut data indicating a cut frame indicating a position of a notch formed in the label, and character string data indicating the character string, and the print control unit or the information control unit determines whether the character string fits in the cut frame based on the print job, and when the character string does not fit in the cut frame, changes a print form of the character string so as to fit in the cut frame.

According to an aspect of the present disclosure, there is provided a print apparatus for printing an image on a label having a mount and a sticker sheet attached to the mount, the print apparatus including: a conveying portion configured to convey the label in a conveying direction; a print unit configured to print an image on the label; and a print control unit configured to control the print unit based on a print job, in which a product region is subjected to printing by printing a product image on the label based on the print job, an information region is subjected to printing to be aligned with the product region in the conveying direction by printing a character string on the label based on the print job, the print job includes product image data indicating the product image, cut data indicating a cut frame indicating a position of a notch formed in the label, and character string data indicating the character string, and the print control unit determines whether the character string fits in the cut frame based on the print job, and when the character string does not fit in the cut frame, changes a print form of the character string so as to fit in the cut frame.

According to an aspect of the present disclosure, there is provided a printing method performed by controlling, by a computer, a print apparatus for performing printing on a product region by printing, based on a print job, a product image on a label having a mount and a sticker sheet attached to the mount, and for performing printing on an information region to be aligned with the product region in a conveying direction of the label by printing a character string based on the print job, the print job including product image data indicating the product image, cut data indicating a cut frame indicating a position of a notch formed in the label, and character string data indicating the character string, the printing method including: determining, by the computer, whether the character string fits in the cut frame based on the print job; and changing, by the computer, a print form of the character string so as to fit in the cut frame when the character string does not fit in the cut frame.

According to an aspect of the present disclosure, there is provided a non-transitory computer-readable storage medium storing a program causing a computer to control a print apparatus for performing printing on a product region by printing, based on a print job, a product image on a label having a mount and a sticker sheet attached to the mount, and for performing printing on an information region to be aligned with the product region in a conveying direction of the label by printing a character string based on the print job, the print job including product image data indicating the product image, cut data indicating a cut frame indicating a position of a notch formed in the label, and character string data indicating the character string, the non-transitory computer-readable storage medium storing a program causing the computer to: determine whether the character string fits in the cut frame based on the print job; and change a print form of the character string so as to fit in the cut frame when the character string does not fit in the cut frame.

### BRIEF DESCRIPTION OF THE DRAWINGS

FIG. 1 is a block diagram showing a print system and a peripheral configuration thereof.
FIG. 2 is a diagram showing a print apparatus.
FIG. 3 is a diagram when a print job is executed on a label.
FIG. 4 is a diagram when a plurality of print jobs are executed on the label.
FIG. 5 is a diagram showing a processing apparatus.
FIG. 6 is a diagram showing a label to be half-cut.
FIG. 7 is a diagram showing a label to which scrapping has been applied.
FIG. 8 is a diagram showing data exchange between the print system and the peripheral configuration thereof.
FIG. 9 is a diagram showing an example of job data.
FIG. 10 is a diagram showing a list screen.
FIG. 11 is a diagram showing a distribution screen.
FIG. 12 is a diagram showing a setting screen.
FIG. 13 is a diagram showing a print range in a cut frame.
FIG. 14 is a diagram when a character string does not fit in the cut frame.
FIG. 15 is a diagram after a size of the character string is changed.
FIG. 16 is a diagram after the number of rows of the character string is changed.
FIG. 17 is a diagram after an orientation of the character string is changed.
FIG. 18 is a diagram showing a two-dimensional code as an example of an alternative symbol.
FIG. 19 is a diagram showing a mark having a specific color as an example of the alternative symbol.
FIG. 20 is a diagram showing a mark indicating a specific numerical value as an example of the alternative symbol.
FIG. 21 is a flowchart illustrating an example of print processing.

### DESCRIPTION OF EMBODIMENTS

Hereinafter, an embodiment of a print system including a print apparatus and an information processing apparatus will be described with reference to the drawings.

### Print System

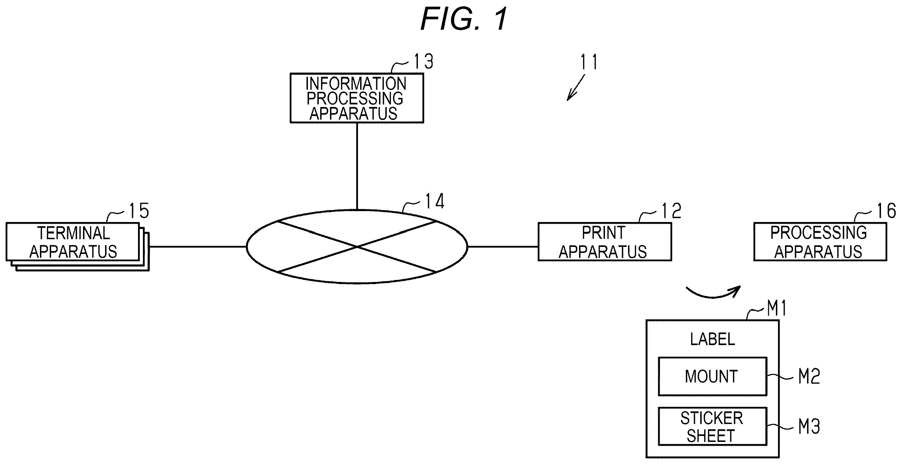

As shown in FIG. 1, a print system 11 includes a print apparatus 12 and an information processing apparatus 13. The print apparatus 12 and the information processing apparatus 13 are each coupled to a network 14. The network 14 is a communication network such as a WAN or a LAN. The print apparatus 12 and the information processing apparatus 13 communicate with each other via the network 14.

The print system 11 is configured to communicate with one or more terminal apparatuses 15. The terminal apparatus 15 is a terminal owned by a user. The terminal apparatus 15 is a smartphone, a tablet, a personal computer, or the like. The terminal apparatus 15 is coupled to the network 14. The terminal apparatus 15 communicates with the information processing apparatus 13 via the network 14. The terminal apparatus 15 may communicate with the print apparatus 12 via the network 14. The user uses the print system 11 via the terminal apparatus 15.

The print apparatus 12 is configured to print an image on a label M1. The print apparatus 12 is, for example, an inkjet printer that ejects an ink as an example of a liquid on the label M1 to thereby print images such as a character or a photograph. The label M1 includes a mount M2 and a sticker sheet M3 attached to the mount M2. The print apparatus 12 performs printing on the sticker sheet M3 of the label M1. The print apparatus 12 prints an image on the label M1 before processing.

The label M1 is processed by a processing apparatus 16 after printing. The processing apparatus 16 is configured to process the label M1 after printing. The processing apparatus 16 is configured to make a notch in the label M1. Specifically, the processing apparatus 16 is configured to half-cut the label M1. The half cutting is processing of making a notch in the sticker sheet M3 in the mount sheet M2 and the sticker sheet M3.

The processing apparatus 16 is configured to half-cut the label M1 and then perform scrapping on the label M1. The scrapping is processing of peeling off the sticker sheet M3 from the mount sheet M2. In the label M1, the sticker sheet M3 is peeled off from the mount sheet M2 such that a portion of the sticker sheet M3 surrounded by the notch remains on the mount sheet M2 by the scrapping.

### Print Apparatus

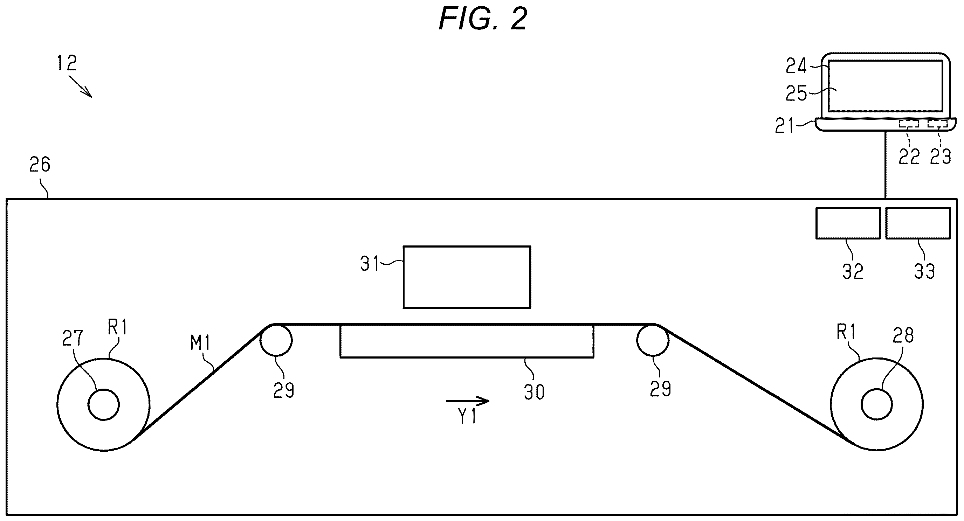

As shown in FIG. 2, the print apparatus 12 may include a processing terminal 21. The processing terminal 21 processes information received by the print apparatus 12. The processing terminal 21 includes a control unit and a storage unit. Specifically, the processing terminal 21 includes a processing control unit 22 and a processing storage unit 23. The storage unit is configured to store a program. The storage unit includes a memory such as a ROM or a RAM. The storage unit may include a hard disk drive, a solid state drive, or the like. The control unit is configured to execute processing in accordance with the program stored in the storage unit. The control unit includes a processor such as a CPU or a GPU. The control unit may include a hardware circuit such as an ASIC. In this way, the processing terminal 21 is implemented by a computer. The processing terminal 21 is, for example, a personal computer. The processing terminal 21 may be a smartphone, a tablet, or the like.

The processing control unit 22 is configured to receive a print job. The print job includes print data indicating an image to be printed. The print job includes job data indicating setting related to printing. The processing control unit 22 may be configured to process the print data based on the job data. In one example, the processing control unit 22 is configured to perform image conversion and image processing on the print data. The processing control unit 22 includes a raster image processor (RIP). The processing control unit 22 is configured to rasterize the print data. The processing control unit 22 converts the print data into raster image data. That is, the processing control unit 22 converts the print data into halftone dot data. The print apparatus 12 prints an image on the label M1 based on the print data after conversion. The processing storage unit 23 stores programs related to the image conversion, image processing, and the like. The processing storage unit 23 stores, for example, a program related to rasterization.

The processing terminal 21 may include a display unit. Specifically, the processing terminal 21 may include a processing display unit 24. The display unit is configured to display information. The display unit is, for example, a liquid crystal display. The processing display unit 24 is configured to display information related to the print apparatus 12. The processing display unit 24 displays, for example, a screen related to the image conversion and the image processing.

The processing terminal 21 may include an operation unit. Specifically, the processing terminal 21 may include a processing operation unit 25. The operation unit is an interface to be operated by the user. The processing operation unit 25 is a touch panel, a pointing device, a keyboard, or the like. The user operates the print apparatus 12 by operating the processing operation unit 25. The user may change setting related to the image conversion, the image processing, or the like via the processing operation unit 25.

The print apparatus 12 includes an apparatus body 26. The apparatus body 26 is coupled to the processing terminal 21. The apparatus body 26 receives data from the processing terminal 21. The apparatus body 26 may incorporate the processing terminal 21. That is, the processing terminal 21 is not limited to a computer externally attached to the apparatus body 26, and may be a computer incorporated in the apparatus body 26.

The apparatus body 26 includes a feeding shaft 27. The feeding shaft 27 is configured to feed the label M1. A roll body R1 is mounted on the feeding shaft 27. The roll body R1 is an article on which the label M1 is wound. The roll body R1, which is obtained by winding the label M1 before printing, is set on the feeding shaft 27.

The apparatus body 26 may include a winding shaft 28. The winding shaft 28 is configured to wind the label M1. The winding shaft 28 forms the roll body R1 by winding the label M1. Specifically, the winding shaft 28 forms the roll body R1 on which the printed label M1 is wound.

The apparatus body 26 includes a conveying portion 29. The conveying portion 29 is configured to convey the label M1. The conveying portion 29 conveys the label M1 in a conveying direction Y1. The conveying portion 29 conveys the label M1 from the feeding shaft 27 toward the winding shaft 28. Therefore, in the print apparatus 12, the conveying direction Y1 is a direction from the feeding shaft 27 toward the winding shaft 28. The conveying portion 29 may convey the label M1 from the feeding shaft 27 toward the processing apparatus 16. That is, the print apparatus 12 may be configured to perform printing on the label M1 in line with respect to the processing apparatus 16. The conveying portion 29 includes, for example, one or more rollers. The conveying portion 29 conveys the label M1 by rotating. The conveying portion 29 may intermittently convey the label M1 or may continuously convey the label M1.

The apparatus body 26 includes a support table 30. The support table 30 is configured to support the label M1. The support table 30 is located, for example, between the feeding shaft 27 and the winding shaft 28. In one example, the support table 30 supports a portion of the label M1 being printed.

The apparatus body 26 includes a print unit 31. The print unit 31 is configured to print an image on the label M1. The print unit 31 prints an image on the label M1 by ejecting a liquid onto the label M1. The print unit 31 faces the support table 30. The print unit 31 is, for example, a head that ejects the liquid. In one example, the print unit 31 is configured to eject an ink of four colors of C, M, Y, and K.

The apparatus body 26 includes a control unit and a storage unit. Specifically, the apparatus body 26 includes a print control unit 32 and a print storage unit 33. The print control unit 32 is substantially the same in configuration as the processing control unit 22. The print storage unit 33 is substantially the same in configuration as the processing storage unit 23. In this way, the apparatus body 26 includes the computer.

The print control unit 32 is configured to receive a print job. In one example, the print control unit 32 receives the print job via the processing terminal 21. The print control unit 32 receives, for example, the print job including print data converted by the processing control unit 22. The print control unit 32 controls the apparatus body 26 based on the print job. Specifically, the print control unit 32 controls the print unit 31 based on the print job. Accordingly, an image is printed on the label M1. The print control unit 32 may control the conveying portion 29, the winding shaft 28, or the like based on the print job. The print control unit 32 may also serve as the processing control unit 22. The print storage unit 33 stores a program related to printing. The print storage unit 33 may store programs related to the image conversion and the image processing. The print storage unit 33 may store text data, image data, or the like in addition to the programs. The print storage unit 33 may also serve as the processing storage unit 23.

The print control unit 32 may be configured to process the print data. The print control unit 32 may include an RIP. The print control unit 32 may be configured to rasterize the print data. The print control unit 32 may be configured to perform, on the print data, image conversion, image processing, or the like. The print control unit 32 may combine the received print data with other data. The print control unit 32 may combine the print data received from the processing terminal 21 with the data stored in the print storage unit 33. The print control unit 32 may combine the text data stored in the print storage unit 33, the image data stored in the print storage unit 33, or the like with the print data received from the processing terminal 21. The print control unit 32 may perform printing on the label M1 based on the combined print data.

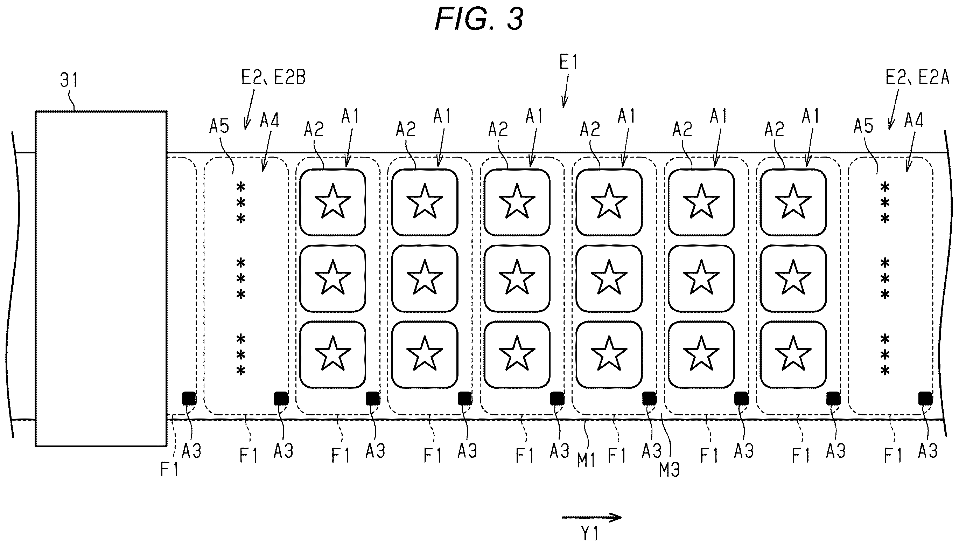

As shown in FIG. 3, the print apparatus 12 is configured to print an image on the label M1 in units of an image frame F1. The image frame F1 indicates one image to be printed based on the print job. The print apparatus 12 prints an image sequence on the label M1 by repeatedly printing images on the label M1 in units of the image frame F1. That is, the image sequence includes a plurality of image frames F1. The print apparatus 12 may be configured to print the image frames F1 at equal intervals. In the print apparatus 12, the print unit 31 may print the image sequence by repeatedly printing the image frames F1 one by one, or the print unit 31 may print the image sequence by repeatedly printing two or more image frames F1.

The print apparatus 12 is configured to print a product image A1 on the label M1. Specifically, the print apparatus 12 is configured to print the image frame F1 including the product image A1. The print apparatus 12 may print the product image A1 at equal intervals by printing the image frames F1 at equal intervals.

The product image A1 is an image included in the print job. The product image A1 is an image to be processed by the processing apparatus 16. The product image A1 is an image including one or more product icons A2. In one example, the product image A1 is an image in which three product icons A2 are arranged over a width of the label M1. The product image A1 may be an image in which a plurality of product icons A2 are arranged in the conveying direction Y1 of the label M1.

The print apparatus 12 may be configured to print a mark image A3 on the label M1. The print apparatus 12 may be configured to print the image frame F1 including the mark image A3. The print apparatus 12 may print the mark image A3 at equal intervals by printing the image frames F1 at equal intervals. The mark image A3 is an image included in the print job. The mark image A3 is a mark indicating a processing timing for the label M1. The mark image A3 is an image indicating a processing position on the label M1.

The print apparatus 12 may print the mark image A3 on the label M1 so as to correspond to the product image A1. The print apparatus 12 may print the mark image A3 together with the product image A1 on the label M1. For example, the print apparatus 12 may print the image frame F1 including the product image A1 and the mark image A3. In this case, the print apparatus 12 prints the same number of mark images A3 as the number of product images A1. The print apparatus 12 may print the mark image A3 at the same interval as the interval of the product image A1.

The print apparatus 12 is configured to perform printing on a product region E1 in the label M1. The print apparatus 12 performs printing on the product region E1 in the label M1 based on the print job. The product region E1 is a region to be subjected to printing by executing the print job. Therefore, the product region E1 corresponds to the print job. The product region E1 is a region set according to the job data. The product region E1 is a region where an image included in the print data is printed. The product region E1 is a region where the product image A1 is located. The product region E1 is a region to be processed by the processing apparatus 16.

The print apparatus 12 performs printing on the product region E1 by printing the product image A1. The print apparatus 12 performs printing on the product region E1 by printing one or more product images A1 on the label M1 based on the print job. The print apparatus 12 performs printing on the product region E1 by printing one or more product images A1 based on setting according to the job data. The print apparatus 12 performs printing on the product region E1 by printing the product image A1 by the number indicated by the job data. It can be said that the product region E1 is implemented by an image sequence in which the image frames F1 indicating the product images A1 are arranged. In one example, the print apparatus 12 performs printing on the product region E1 by repeatedly printing the product image A1.

The print apparatus 12 may be configured to print an information image A4 on the label M1. The print apparatus 12 may be configured to print the image frame F1 including the information image A4. The print apparatus 12 may print the information image A4 at equal intervals by printing the image frames F1 at equal intervals.

The information image A4 is an image included in the print job. The information image A4 is an image indicating information related to the print job. The information image A4 is, for example, an image indicating a content of the job data. The job data includes data indicating setting related to printing of the information image A4. The information image A4 indicates information related to a product, information related to processing, and the like. The information image A4 is printed to transmit information.

The information image A4 is an image including one or more character strings A5. The information image A4 is, for example, an image in which one or more character strings A5 are arranged in accordance with the arrangement of the product icons A2 in the product image A1. In one example, the information image A4 is an image in which three character strings A5 are arranged over the width of the label M1. The information image A4 may be an image in which a plurality of character strings A5 are arranged in the conveying direction Y1 of the label M1. The plurality of character strings A5 may be different images.

The character string A5 is an image included in the print job. The character string A5 indicates information related to the print job. The character string A5 indicates, for example, the content of the job data. The job data includes data indicating setting related to printing of the character string A5. The character string A5 indicates information related to a product and information related to processing. The character string A5 indicates an ID of the product, a delivery date of the product, the number of the products to be delivered, a delivery form of the product, or the like.

The print apparatus 12 may print the mark image A3 on the label M1 so as to correspond to the information image A4. The print apparatus 12 may print the mark image A3 together with the information image A4 on the label M1. For example, the print apparatus 12 may print the image frame F1 including the information image A4 and the mark image A3. In this case, the print apparatus 12 prints the same number of mark images A3 as the number of information images A4. The print apparatus 12 may print the mark image A3 at the same interval as the interval of the information image A4.

The print apparatus 12 is configured to perform printing on an information region E2 in the label M1. The print apparatus 12 performs printing on the information region E2 in the label M1 based on the print job. The information region E2 is a region to be subjected to printing by executing the print job. Therefore, the information region E2 corresponds to the print job. The information region E2 is a region set according to the job data. The information region E2 is a region where an image indicated by the job data is printed. The information region E2 is a region where the character string A5 is located. The information region E2 is a region where the information image A4 is located.

The print apparatus 12 performs printing on the information region E2 in the label M1 when performing printing on the product region E1 in the label M1. The information region E2 is a region associated with the product region E1. The information region E2 is a region different from the product region E1. The information region E2 is a region processed as the product region E1 is processed.

The print apparatus 12 performs printing on the information region E2 so as to be aligned with the product region E1 in the conveying direction Y1. The information region E2 may be subjected to printing downstream of the product region E1, may be subjected to printing upstream of the product region E1, or may be subjected to printing downstream and upstream of the product region E1.

The print apparatus 12 performs printing on the information region E2 by printing the character string A5. The print apparatus 12 performs printing on the information region E2 by printing the character string A5 on the label M1 based on the print job. The print apparatus 12 performs printing on the information region E2 by successively printing the character strings A5 on the label M1 based on the print job. Specifically, the print apparatus 12 performs printing on the information region E2 by printing the information image A4. The print apparatus 12 performs printing on the information region E2 by printing one or more information images A4 on the label M1 based on the print job. The print apparatus 12 performs printing on the information region E2 by printing one or more information images A4 based on setting according to the job data. The information region E2 is subjected to printing by printing the information image A4 by the number indicated by the job data. The information region E2 may include an image sequence in which the image frames F1 indicating the information images A4 are arranged.

A size of the image frame F1 constituting the information region E2 matches a size of the image frame F1 constituting the product region E1. Therefore, the print apparatus 12 performs printing on the product region E1 and the information region E2 by printing a plurality of image frames F1. The print apparatus 12 may print the image frames F1 at equal intervals over the product region E1 and the information region E2. In this case, the image frame F1 may not include the mark image A3. The print apparatus 12 may print the image frames F1 such that the intervals of the image frames F1 are different in the product region E1 and the information region E2. In this case, the image frame F1 may include the mark image A3.

The information region E2 may include a downstream information region E2A. The downstream information region E2A is an information region E2 located downstream of the product region E1 in the conveying direction Y1. Specifically, the downstream information region E2A is an information region E2 subjected to printing in the print apparatus 12 before the product region E1. The print apparatus 12 may be configured to perform printing on the downstream information region E2A in the label M1.

The information region E2 may include an upstream information region E2B. The upstream information region E2B is an information region E2 located upstream of the product region E1 in the conveying direction Y1. Specifically, the upstream information region E2B is an information region E2 subjected to printing in the print apparatus 12 after the product region E1. The print apparatus 12 may be configured to perform printing on the upstream information region E2B in the label M1.

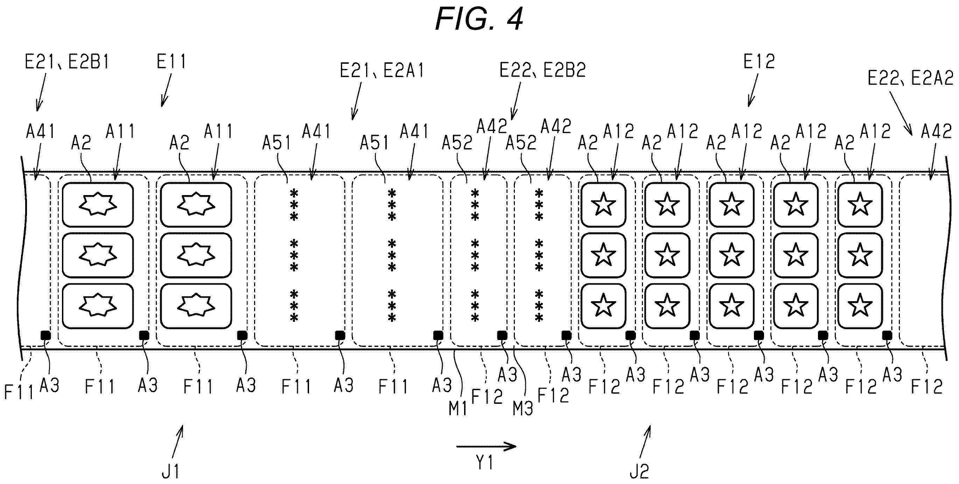

As shown in FIG. 4, the print apparatus 12 may execute a plurality of print jobs on the label M1. For example, the print apparatus 12 may continuously execute a first print job J1 and a second print job J2. In the example shown in FIG. 4, the print apparatus 12 executes the first print job J1 after executing the second print job J2. The print apparatus 12 may execute the second print job J2 after executing the first print job J1. The first print job J1 and the second print job J2 are names given simply for distinction, and are not determined by the order of execution. The first print job J1 and the second print job J2 refer to two continuous print jobs among the plurality of print jobs. When executing a plurality of print jobs, the print apparatus 12 may print a table of contents of the print jobs at a leading end or a trailing end of the label M1. In this case, an operator of the processing apparatus 16 can figure out the plurality of print jobs for printing on the label M1 with the table of contents.

The print apparatus 12 performs printing on the product region E1 in the label M1 for each print job based on the plurality of print jobs. In the example shown in FIG. 4, the print apparatus 12 performs printing on a first product region E11 and a second product region E12 in the label M1 based on the first print job J1 and the second print job J2. The first product region E11 is a product region E1 according to the first print job J1. The second product region E12 is a product region E1 according to the second print job J2.

The print apparatus 12 performs printing on the information region E2 in the label M1 for each print job based on the plurality of print jobs. In the example shown in FIG. 4, the print apparatus 12 performs printing on a first information region E21 and a second information region E22 in the label M1 based on the first print job J1 and the second print job J2. The first information region E21 is an information region E2 according to the first print job J1. The second information region E22 is an information region E2 according to the second print job J2. The first information region E21 is subjected to printing at both downstream and upstream of the first product region E11 in the conveying direction Y1, or may be at only downstream or only upstream. The second information region E22 is subjected to printing at both downstream and upstream of the second product region E12 in the conveying direction Y1, or may be at only downstream or only upstream.

The first information region E21 may include a first downstream information region E2A1. The first downstream information region E2A1 is a downstream information region E2A located downstream of the first product region E11 in the conveying direction Y1. The first downstream information region E2A1 is a downstream information region E2A subjected to printing before the first product region E11. The first downstream information region E2A1 is a downstream information region E2A according to the first print job J1.

The first information region E21 may include a first upstream information region E2B1. The first upstream information region E2B1 is an upstream information region E2B located upstream of the first product region E11 in the conveying direction Y1. The first upstream information region E2B1 is an upstream information region E2B subjected to printing after the first product region E11. The first upstream information region E2B1 is an upstream information region E2B according to the first print job J1.

The second information region E22 may include a second downstream information region E2A2. The second downstream information region E2A2 is a downstream information region E2A located downstream of the second product region E12 in the conveying direction Y1. The second downstream information region E2A2 is a downstream information region E2A subjected to printing before the second product region E12. The second downstream information region E2A2 is a downstream information region E2A according to the second print job J2.

The second information region E22 may include a second upstream information region E2B2. The second upstream information region E2B2 is an upstream information region E2B located upstream of the second product region E12 in the conveying direction Y1. The second upstream information region E2B2 is an upstream information region E2B subjected to printing after the second product region E12. The second upstream information region E2B2 is an upstream information region E2B according to the second print job J2.

The print apparatus 12 performs printing on the image frame F1 in the label M1 for each print job based on the plurality of print jobs. In the example shown in FIG. 4, the print apparatus 12 prints a first image frame F11 and a second image frame F12 on the label M1 based on the first print job J1 and the second print job J2. The first image frame F11 is an image frame F1 according to the first print job J1. The second image frame F12 is an image frame F1 according to the second print job J2. The first image frame F11 includes the first product region E11 and the first information region E21. The second image frame F12 includes the second product region E12 and the second information region E22. The number of prints of the first image frame F11 is determined by the setting of the first product region E11 and the first information region E21. The number of prints of the second image frame F12 is determined by the setting of the second product region E12 and the second information region E22.

The first product region E11 is implemented by a first product image A11. The first product region E11 is implemented by an image sequence in which first image frames F11 including first product images A11 are arranged. The first product image A11 is a product image A1 according to the first print job J1. The first product region E11 may be implemented by the first image frame F11 including the first product image A11 and the mark image A3.

The second product region E12 is implemented by a second product image A12. The second product region E12 is implemented by an image sequence in which second image frames F12 including second product images A12 are arranged. The second product image A12 is a product image A1 according to the second print job J2. The second product region E12 may be implemented by the second image frame F12 including the second product image A12 and the mark image A3.

The first information region E21 is implemented by a first character string A51. Specifically, the first information region E21 is implemented by a first information image A41. The first information region E21 includes the first image frame F11 indicating the first information image A41. The first information image A41 is an information image A4 according to the first print job J1. The first information region E21 may be implemented by the first image frame F11 including the first information image A41 and the mark image A3.

The second information region E22 is implemented by a second character string A52. The second information region E22 is implemented by a second information image A42. The second information region E22 includes the second image frame F12 indicating the second information image A42. The second information image A42 is an information image A4 according to the second print job J2. The second information region E22 may be implemented by the second image frame F12 including the second information image A42 and the mark image A3.

The size of the image frame F1 may be different depending on the print job. In the example shown in FIG. 4, a size of the first image frame F11 is larger than a size of the second image frame F12. Specifically, in the conveying direction Y1, a length of the first image frame F11 is larger than a length of the second image frame F12. When the image frames F1 are printed at equal intervals, once the sizes of the image frames F1 are different, the intervals between the mark images A3 are different. In one example, the interval between the mark images A3 in the first image frame F11 is larger than the interval between the mark images A3 in the second image frame F12. In the plurality of print jobs, the mark images A3 may be images of the same type or images different in type. The mark images A3 may be any images that can be detected by the processing apparatus 16.

### Processing Apparatus

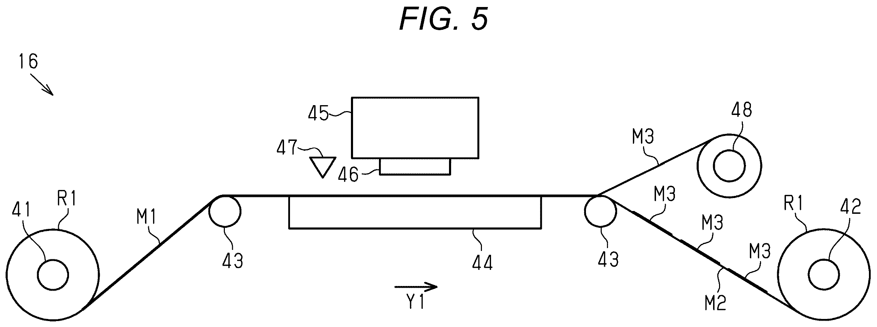

As shown in FIG. 5, the processing apparatus 16 may include a supply shaft 41. The supply shaft 41 is configured to feed the label M1. The roll body R1 is mounted on the supply shaft 41. Specifically, the roll body R1 obtained by winding the label M1 on which printing has been performed and on which processing has not been performed is set on the supply shaft 41. When the roll body R1 wound around the winding shaft 28 is set on the supply shaft 41, the leading end and the trailing end of the label M1 are exchanged between the processing apparatus 16 and the print apparatus 12. Specifically, in the processing apparatus 16, a portion of the label M1 that is wound last by the print apparatus 12 is supplied first by the supply shaft 41. That is, in the label M1, an end portion which is the trailing end in the print apparatus 12 turns to the leading end in the processing apparatus 16. The processing apparatus 16 may be configured to directly receive the label M1 from the print apparatus 12. That is, the processing apparatus 16 may be configured to process the label M1 in line with respect to the print apparatus 12. In this case, the leading end and the trailing end of the label M1 are not exchanged between the print apparatus 12 and the processing apparatus 16.

The processing apparatus 16 includes a collection shaft 42. The collection shaft 42 is configured to wind the label M1. Specifically, the collection shaft 42 is configured to wind the processed label M1. The collection shaft 42 is configured to wind the label M1 subjected to scrapping. The collection shaft 42 forms the roll body R1 by winding the label M1. The collection shaft 42 forms the roll body R1 on which the label M1 is wound in a state where a part of the sticker sheet M3 remains on the mount M2.

The processing apparatus 16 includes a conveying mechanism 43. The conveying mechanism 43 is configured to convey the label M1. The conveying mechanism 43 conveys the label M1 in the conveying direction Y1. The conveying mechanism 43 conveys the label M1 from the supply shaft 41 toward the collection shaft 42. Therefore, in the processing apparatus 16, the conveying direction Y1 is a direction from the supply shaft 41 toward the collection shaft 42. The conveying mechanism 43 includes, for example, one or more rollers. The conveying mechanism 43 conveys the label M1 by rotating. The conveying mechanism 43 intermittently conveys the label M1.

The processing apparatus 16 includes a processing table 44. The processing table 44 is configured to support the label M1. The processing table 44 is located, for example, between the supply shaft 41 and the collection shaft 42. In one example, the processing table 44 supports a portion in processing in the label M1.

The processing apparatus 16 includes a processing unit 45. The processing unit 45 is configured to process the label M1. The processing unit 45 processes the label M1 by making a notch in the label M1. The processing unit 45 is configured to half-cut the label M1. The processing unit 45 is configured to make a notch in the sticker sheet M3 of the label M1.

The processing unit 45 faces the processing table 44. The processing unit 45 is configured to move up and down with respect to the processing table 44. The processing unit 45 includes a processing blade 46. The processing unit 45 presses the processing blade 46 against the label M1 by approaching the label M1. The processing unit 45 makes a notch in the label M1 by pressing the processing blade 46 against the label M1.

The processing unit 45 is configured such that the processing blade 46 can be replaced. The operator of the processing apparatus 16 changes the processing blade 46 in accordance with the print job. Specifically, the operator changes to the processing blade 46 capable of making a notch suitable for the print job. The operator may change the processing blade 46 for each print job. For example, the operator changes the processing blade 46 in accordance with the arrangement of the product icons A2 in the product image A1.

The processing apparatus 16 may include a detection unit 47. The detection unit 47 is configured to detect the mark image A3. The detection unit 47 is, for example, a monochrome sensor. The detection unit 47 may be located at a position shifted from the processing unit 45 or may be located at a position overlapping the processing unit 45 in the conveying direction Y1.

The processing apparatus 16 may operate to process the label M1 by the processing unit 45 when the detection unit 47 detects the mark image A3. The processing apparatus 16 may operate to process the label M1 each time the detection unit 47 detects the mark image A3. When the detection unit 47 detects the mark image A3, the processing apparatus 16 stops the conveyance of the label M1. After stopping the conveyance of the label M1, the processing apparatus 16 presses the processing blade 46 against the label M1. After making a notch in the label M1 by the processing blade 46, the processing apparatus 16 resumes the conveyance of the label M1. In this way, the processing apparatus 16 may sequentially make a notch in the label M1.

The detection unit 47 may be located to detect the mark image A3 included in the image frame F1 having the notch made by the processing blade 46. In this case, the image frames F1 may not be printed at equal intervals. The detection unit 47 may be configured to detect the mark image A3 included in the image frame F1 different from the image frame F1 having the notch made by the processing blade 46. In this case, the image frames F1 are preferably printed at equal intervals.

The processing apparatus 16 may operate to press the processing blade 46 at predetermined intervals. In this case, the image frames F1 are preferably printed at equal intervals. The processing apparatus 16 operates to repeat the conveyance and the stop of the label M1. The processing apparatus 16 operates to press the processing blade 46 against the label M1 while the label M1 is stopped. After making a notch in the label M1 by the processing blade 46, the processing apparatus 16 resumes the conveyance of the label M1. In this way, the processing apparatus 16 may sequentially make a notch in the label M1.

The processing apparatus 16 may be configured to change an operation cycle of the conveying mechanism 43 and the processing unit 45 in accordance with the interval between the image frames F1. The operator of the processing apparatus 16 may adjust the operation cycle of the processing apparatus 16 in accordance with the print job. The operator may adjust the operation cycle for each print job. For example, the operator adjusts the operation cycle in accordance with the interval between the image frames F1 indicating the product image A1.

The processing apparatus 16 includes a peeling shaft 48. The peeling shaft 48 is configured to peel off the sticker sheet M3 from the mount M2. Specifically, the peeling shaft 48 is configured to wind the sticker sheet M3 from the label M1 having the notch made by the processing blade 46. That is, the peeling shaft 48 scrapes the label M1. When the peeling shaft 48 winds the sticker sheet M3, a part of the sticker sheet M3 surrounded by the notch remains on the mount sheet M2.

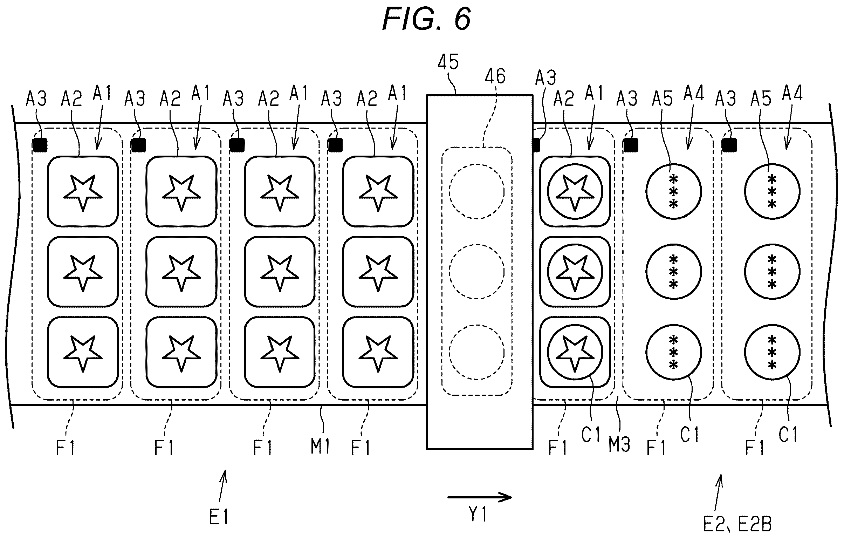

As shown in FIG. 6, the processing apparatus 16 forms a cut frame C1 by making a notch in the label M1. In the example shown in FIG. 6, the cut frame C1 is a circular notch formed to correspond to the product icon A2. The cut frame C1 is formed to correspond to the character string A5. In one example, the processing apparatus 16 forms three cut frames C1 over the width of the label M1. By changing the processing blade 46, the processing apparatus 16 can make a notch in the label M1 not only in a circular shape but also in other shapes such as a triangular shape and a rectangular shape. The processing apparatus 16 forms the cut frame C1 by pressing the processing blade 46 against the label M1. The cut frame C1 is a frame formed by the notch. A portion of the sticker sheet M3 surrounded by the cut frame C1 is a portion not removed by the scrapping.

The processing apparatus 16 forms the cut frame C1 in the image frame F1. The processing apparatus 16 forms the cut frame C1 for each image frame F1. The processing apparatus 16 forms the cut frame C1 in the image frame F1 constituting the product region E1. The processing apparatus 16 forms the cut frame C1 in the product image A1. The processing apparatus 16 forms the cut frame C1 in the product icon A2. The processing apparatus 16 forms the cut frame C1 in the image frame F1 constituting the information region E2. The processing apparatus 16 forms the cut frame C1 in the information image A4. The processing apparatus 16 forms the cut frame C1 in the character string A5.

The processing apparatus 16 may form the cut frame C1 in the roll body R1 on which a plurality of print jobs have been executed. The processing apparatus 16 forms a first cut frame in the label M1 for the first print job J1. The first cut frame is a cut frame C1 by the processing blade 46 indicated by the first print job J1. The processing apparatus 16 forms a second cut frame in the label M1 for the second print job J2. The second cut frame is a cut frame C1 by the processing blade 46 indicated by the second print job J2. The first cut frame and the second cut frame may be formed by the same processing blade 46 or may be formed by different processing blades 46.

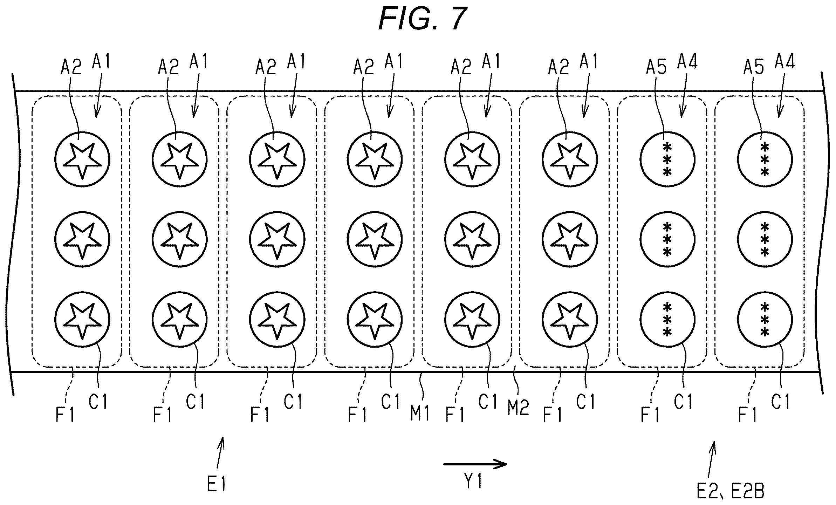

As shown in FIG. 7, the processing apparatus 16 peels off the sticker sheet M3 from the label M1 in which the cut frame C1 is formed. The processing apparatus 16 performs scrapping on the label M1 in which the cut frame C1 is formed. At this time, a portion of the sticker sheet M3 surrounded by the cut frame C1 remains on the label M1. That is, the portion of the product image A1 surrounded by the cut frame C1 is not removed by the scrapping. A portion of the information image A4 surrounded by the cut frame C1 is not removed by the scrapping. Therefore, a portion indicating the product icon A2 in the product image A1 remains on the label M1. A portion indicating the character string A5 in the information image A4 remains on the label M1.

When the character string A5 fits in the cut frame C1, information related to the print job remains on the processed label M1. Accordingly, the user of the print system 11 can easily manage the processed label M1. On the other hand, when the character string A5 does not fit in the cut frame C1, for example, when the character string A5 protrudes from the cut frame C1, the character string A5 is lost or removed by scrapping. In this case, the information related to the print job does not remain on the processed label M1.

The cut frame C1 is formed in the label M1 in accordance with the product image A1. That is, the cut frame C1 is formed over the product region E1 and the information region E2 in a shape, a position, and a size corresponding to the product image A1. Therefore, in order to make the character string A5 remain on the processed label M1, it is necessary to print the information image A4 in accordance with the cut frame C1 formed in the information region E2 in the shape, the position, and the size corresponding to the product image A1.

### Terminal Apparatus

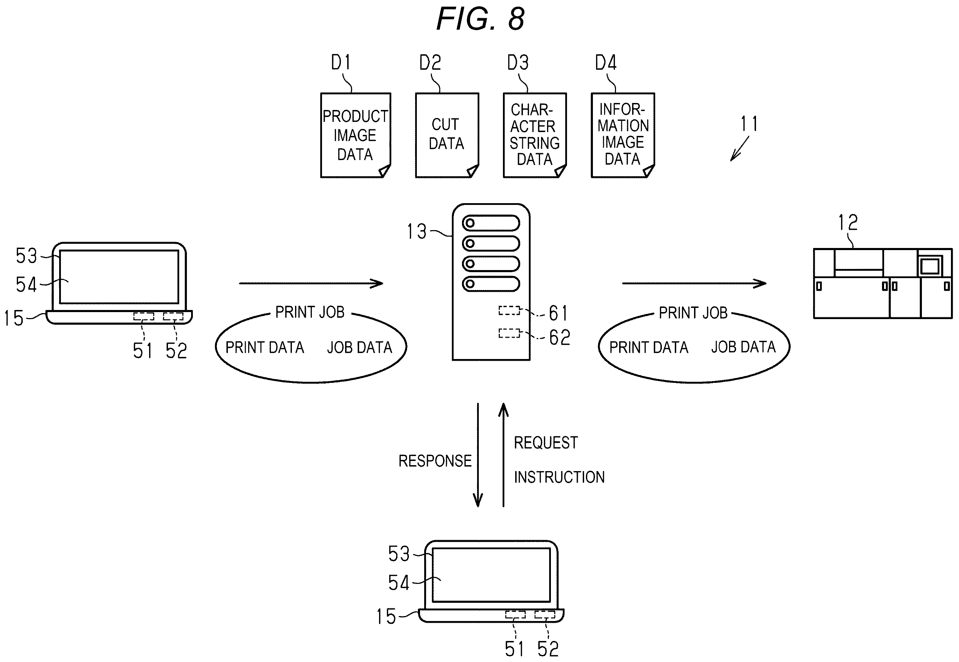

As shown in FIG. 8, the terminal apparatus 15 has hardware configuration same as that of the processing terminal 21. The terminal apparatus 15 includes a control unit and a storage unit. Specifically, the terminal apparatus 15 includes a terminal control unit 51 and a terminal storage unit 52. In this way, the terminal apparatus 15 is implemented by a computer.

The terminal apparatus 15 includes a display unit. Specifically, the terminal apparatus 15 includes a terminal display unit 53. The terminal display unit 53 is configured to display information related to the print system 11. The terminal display unit 53 may display, for example, a screen provided from the print system 11.

The terminal apparatus 15 includes an operation unit. Specifically, the terminal apparatus 15 includes a terminal operation unit 54. The user operates the terminal apparatus 15 by operating the terminal operation unit 54. The user gives instructions or data to the print system 11 via the terminal operation unit 54.

The terminal apparatus 15 is configured to transmit the print job to the print system 11. In one example, the terminal apparatus 15 is configured to transmit the print job to the information processing apparatus 13. The terminal apparatus 15 may be configured to transmit the print job to the print apparatus 12. The user uploads the print job from the terminal apparatus 15 to the information processing apparatus 13. The user stores the print job in the information processing apparatus 13.

The print job includes print data. The print data is data including an image to be printed on the label M1. The print data includes product image data D1. The terminal apparatus 15 may be configured to transmit the product image data D1 to the print system 11. For example, the terminal apparatus 15 may be configured to transmit the product image data D1 to the information processing apparatus 13.

The product image data D1 is data including an image to be printed in the product region E1. The product image data D1 is data indicating the product image A1. The product image data D1 includes data indicating the product icon A2 constituting the product image A1. The product image data D1 is data indicating the image frame F1 to be printed in the product region E1. The product image data D1 may include data indicating the mark image A3 to be printed together with the product image A1. The product image data D1 may include an image to be printed in the information region E2. The product image data D1 is, for example, a portable document format (PDF) file indicating an image such as the product image A1, the product icon A2, and the mark image A3.

The product image data D1 may be data that can independently handle images such as the product image A1, the product icon A2, and the mark image A3. The product image data D1 may be data in which an identifier is assigned to each image. The product image data D1 may be data in which layers are divided for each image. The product image data D1 may be data from which the product image A1 can be extracted, the product icon A2 can be extracted, or the mark image A3 can be extracted.

The first print job J1 includes first print data. The first print data includes first product image data. The first product image data is data including the first product image A11. The second print job J2 includes second print data. The second print data includes second product image data. The second product image data is data including the second product image A12.

The terminal apparatus 15 may generate the product image data D1. The terminal apparatus 15 may generate the product image data D1 by, for example, image editing software for editing an image, upload software for transmitting a print job to the information processing apparatus 13, or the like. When the product icons A2 are arranged, that is, so-called "imposed" by the software in the terminal apparatus 15, the product image data D1 may be generated. The software in the terminal apparatus 15 may generate the product image data D1 by arranging the product icon A2, the mark image A3, or the like.

The print job includes job data. The terminal apparatus 15 is configured to transmit the job data to the print system 11. For example, the terminal apparatus 15 is configured to transmit the job data to the information processing apparatus 13. The job data is data indicating setting related to the printing in the product region E1. The job data is data indicating setting related to the printing in the information region E2. The job data is, for example, a job definition format (JDF) file in which the setting related to the printing is described.

The first print job J1 includes first job data. The first job data indicates setting related to the printing in the first product region E11. The first job data indicates setting related to the printing in the first information region E21. The second print job J2 includes second job data. The second job data indicates setting related to the printing in the second product region E12. The second job data indicates setting related to the printing in the second information region E22.

The job data may be generated by the terminal apparatus 15. In the terminal apparatus 15, for example, the job data may be generated by JDF formation software. The terminal apparatus 15 may generate the job data based on information provided from the user with the JDF formation software. The terminal apparatus 15 may generate the job data based on slip data indicating a content of an ordered product. The slip data is data indicating transaction contents of an orderer and an order receiver. The slip data includes various kinds of information on the product such as the delivery date of the product, the number of the products to be delivered, the delivery form of the product, and a design of the product. The job data may be automatically generated based on the slip data, or may be generated by the user inputting information to the terminal apparatus 15.

The print job includes cut data D2. The cut data D2 may be included in the job data, may be included in the print data, or may be included in both. The cut data D2 is data indicating the cut frame C1. The cut data D2 is data indicating the shape, the position, the size, or the like of the cut frame C1. Specifically, the cut data D2 is data indicating the shape, the position, the size, or the like of the cut frame C1 in the image frame F1. That is, the cut data D2 is data related to the notch formed in the label M1. The cut data D2 may be a file described with respect to the cut frame C1. The cut data D2 may be a frame image indicating the cut frame C1. The frame image may be included in the product image data D1, for example. The frame image may be printed on the label M1 together with the product image A1. The frame image may be printed on the label M1 so as to be superimposed on the product image A1, for example. The frame image may be printed on the label M1 together with the information image A4.

The first print job J1 includes first cut data. The first cut data is data indicating the first cut frame. The second print job J2 includes second cut data. The second cut data is data indicating the second cut frame.

The print job includes character string data D3. The character string data D3 may be included in the job data, may be included in the print data, or may be included in both. The character string data D3 is data indicating the character string A5. The character string data D3 is, for example, text data indicating the character string A5. A numerical value indicating a size of the character string A5 may be set in the character string data D3. A numerical value indicating the number of rows of the character string A5 may be set in the character string data D3. A numerical value indicating an orientation of the character string A5 may be set in the character string data D3.

The first print job J1 includes first character string data. The first character string data is data indicating the first character string A51. A point indicating the size of first character string A51 may be set in the first character string data. The second print job J2 includes second character string data. The second character string data is data indicating the second character string A52. A point indicating a size of second character string A52 may be set in the second character string data.

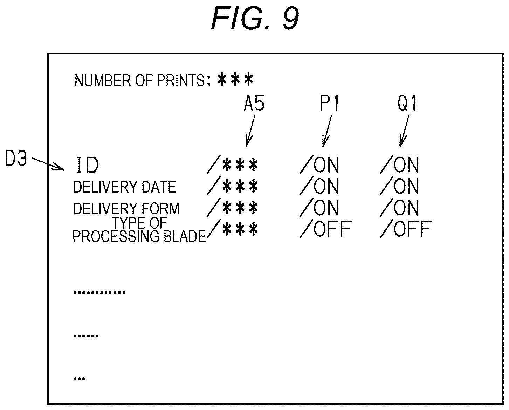

As shown in FIG. 9, the job data includes information indicating the number of prints of the product image A1. In one example, the job data includes the character string data D3. The character string data D3 may include the character string A5 indicating the ID of the product. The character string data D3 may include the character string A5 indicating the delivery date of the product. The character string data D3 may include the character string A5 indicating the delivery form of the product. The delivery form may indicate a form of the label M1 such as a roll shape or a sheet shape. The delivery form may indicate the number of roll-shaped labels M1, the number of sheet-shaped labels M1, and the like. The character string data D3 may include the character string A5 specifying the type of the processing blade 46.

The print job may include a remaining flag P1. The remaining flag P1 may be set in the character string data D3, for example. The remaining flag P1 is a flag indicating that the character string A5 needs to be left in the processed label M1. The remaining flag P1 is a flag indicating whether the character string A5 needs to fit in the cut frame C1. The remaining flag P1 is set for each character string A5. The character string A5 in which the remaining flag P1 is set is information that needs to be left on the label M1 after processing. The character string A5 in which the remaining flag P1 is not set is information that does not need to be left on the label M1 after processing. For example, the character string A5 that needs to be referred to after processing is the information that needs to be left on the label M1 after processing. Therefore, the character string A5 in which the remaining flag P1 is set needs to be printed to fit in the cut frame C1. On the other hand, the character string A5 in which the remaining flag P1 is not set does not need to be printed to fit in the cut frame C1. For example, the character string A5 in which the remaining flag P1 is not set is information that may be referred to during processing.

The print job may include an alternative flag Q1. The alternative flag Q1 may be set in the character string data D3, for example. The alternative flag Q1 is a flag indicating an alternative for the character string A5. The alternative flag Q1 is a flag indicating that a symbol corresponding to the character string A5 is printed instead of printing the character string A5. Specifically, the alternative flag Q1 is a flag indicating that a symbol replacing the character string A5 is printed when the character string A5 does not fit in the cut frame C1. That is, the character string A5 in which the alternative flag Q1 is set is the character string A5 in which the remaining flag P1 is set.

As shown in FIG. 8, the print job includes information image data D4. Specifically, the print data includes the information image data D4. The terminal apparatus 15 may be configured to transmit the information image data D4 to the print system 11. For example, the terminal apparatus 15 may be configured to transmit the information image data D4 to the information processing apparatus 13.

The information image data D4 is data including an image to be printed on the label M1. The information image data D4 includes an image to be printed in the information region E2. The information image data D4 is data indicating the information image A4. The information image data D4 includes data indicating the character string A5 constituting the information image A4. The information image data D4 is data indicating the image frame F1 to be printed in the information region E2. The information image data D4 may include data indicating the mark image A3 to be printed together with the information image A4. The information image data D4 may be, for example, a PDF file.

The first print job J1 includes the first print data. The first print data includes first information image data. The first information image data is data including the first information image A41. The second print job J2 includes the second print data. The second print data includes second information image data. The second information image data is data including the second information image A42.

The terminal apparatus 15 may generate the information image data D4. The terminal apparatus 15 may generate the information image data D4 based on the print data, the job data, or the like. For example, the terminal apparatus 15 may generate the information image data D4 based on the product image data D1, the cut data D2, and the character string data D3. The terminal apparatus 15 may generate the information image data D4 by arranging the character string A5 in the cut frame C1 in the image frame F1 indicated by the product image data D1. The terminal apparatus 15 may transmit the information image data D4 as a print job to the print system 11.

When generating the information image data D4, the terminal apparatus 15 may determine whether the character string A5 fits in the cut frame C1. The terminal apparatus 15 may determine whether the character string A5 in which the remaining flag P1 is set fits in the cut frame C1. When the character string A5 does not fit in the cut frame C1, the terminal apparatus 15 may notify the user that the character string A5 does not fit in the cut frame C1. For example, the terminal apparatus 15 may display a notification screen for notifying that the character string A5 does not fit in the cut frame C1.

### Information Processing Apparatus

The information processing apparatus 13 includes a control unit and a storage unit. Specifically, the information processing apparatus 13 includes an information control unit 61 and an information storage unit 62. In this way, the information processing apparatus 13 is implemented by a computer. The information processing apparatus 13 includes one or more servers. The information processing apparatus 13 may be implemented by a single server or may be implemented by a plurality of servers cooperating with each other.

The information processing apparatus 13 is configured to process the information related to the print apparatus 12. The information processing apparatus 13 receives information from the terminal apparatus 15 and transmits the information to the print apparatus 12. The information control unit 61 is configured to receive the information from the terminal apparatus 15. The information control unit 61 is configured to transmit the information to the print apparatus 12.

The information processing apparatus 13 is configured to receive the print job. The information processing apparatus 13 is configured to receive the print data, the job data, or the like from the terminal apparatus 15. For example, the information processing apparatus 13 is configured to receive the product image data D1, the cut data D2, the character string data D3, or the like. The information processing apparatus 13 may be configured to receive the information image data D4.

The information processing apparatus 13 is configured to store one or more print jobs. The information processing apparatus 13 stores the print job received from the terminal apparatus 15. That is, the information processing apparatus 13 saves the print job. The information processing apparatus 13 accumulates a plurality of print jobs by sequentially saving the print jobs.

The information processing apparatus 13 is configured to transmit the print job to the print apparatus 12. For example, the information processing apparatus 13 transmits, to the print apparatus 12, one or more print jobs among the plurality of print jobs accumulated in the information processing apparatus 13.

The information processing apparatus 13 may be configured to add data to the stored print job. The information processing apparatus 13 may add data to the print data or may add data to the job data. The information processing apparatus 13 may add the cut data D2 to the print job or may add the character string data D3 to the print job. For example, after accumulating the print job received from the terminal apparatus 15, the information processing apparatus 13 may add the cut data D2 and the character string data D3 to the print job. The information processing apparatus 13 may separately receive the cut data D2 and the character string data D3 from the terminal apparatus 15, or may store them in advance.

The information processing apparatus 13 is configured to receive a request from the terminal apparatus 15. For example, the information processing apparatus 13 is configured to receive a request for browsing the print job from the terminal apparatus 15. In one example, the information processing apparatus 13 receives a request for browsing the print job from a browser in the terminal apparatus 15. The terminal apparatus 15 that transmits the browsing request may be a terminal same as the terminal apparatus 15 that has uploaded the print job, or may be a different terminal. The information processing apparatus 13 is configured to respond to the request from the terminal apparatus 15. The information processing apparatus 13 transmits information of the print job related to the user to the terminal apparatus 15 based on, for example, user authentication with an ID and a password.

The information processing apparatus 13 is configured to receive an instruction from the terminal apparatus 15. The information processing apparatus 13 operates based on the instruction received from the terminal apparatus 15. The information processing apparatus 13 receives, for example, a transmission instruction, an addition instruction, or the like from the terminal apparatus 15. The transmission instruction is an instruction to transmit the print job to the print apparatus 12. When receiving the transmission instruction, the information processing apparatus 13 transmits, to the print apparatus 12, one or more print jobs selected from the plurality of print jobs accumulated in the information processing apparatus 13. The addition instruction is an instruction to add data to the print job. When receiving the addition instruction, the information processing apparatus 13 adds data such as the cut data D2 and the character string data D3 to the print job accumulated in the information processing apparatus 13.

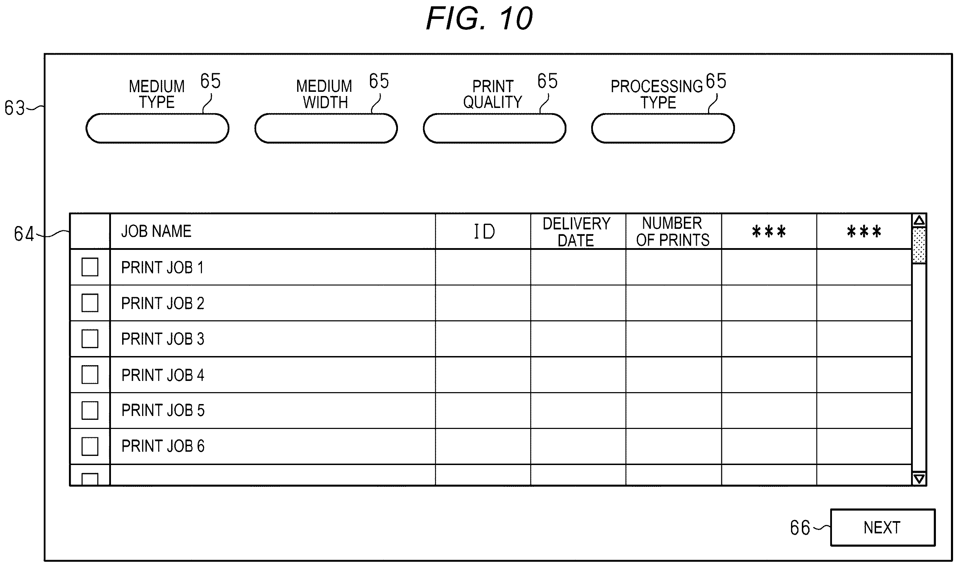

As shown in FIG. 10, the information processing apparatus 13 may be configured to cause the terminal apparatus 15 to display a list screen 63. Upon reception of the browsing request, the information processing apparatus 13 may cause the terminal apparatus 15 to display the list screen 63. The list screen 63 includes a list field 64. A list of the print jobs accumulated in the information processing apparatus 13 is displayed in the list field 64. The print jobs may be displayed in the list field 64 such that contents of the print jobs can be confirmed. In the list field 64, for example, the ID of the product, the delivery date of the product, or the number of printed products may be displayed.

The list screen 63 is configured such that one or more print jobs can be selected from the plurality of print jobs displayed in the list field 64. For example, the print job is selected by selecting a check box displayed for each print job.

The information processing apparatus 13 may be configured to accept editing on the print job. Specifically, the information processing apparatus 13 may accept editing on the job data. For example, the information processing apparatus 13 may accept editing on the print job to be selected in the list field 64. One or more selection fields 65 may be displayed on the list screen 63. In the selection field 65, for example, items which can be selected by the user are displayed in a list. The user may edit the print job by operating the selection field 65.

A transition button 66 is displayed on the list screen 63. The transition button 66 is a button for making the transition of the screen. When the transition button 66 is operated in a state where the print job is selected on the list screen 63, the information processing apparatus 13 makes the transition of the display of the terminal apparatus 15 from the list screen 63 to another screen.

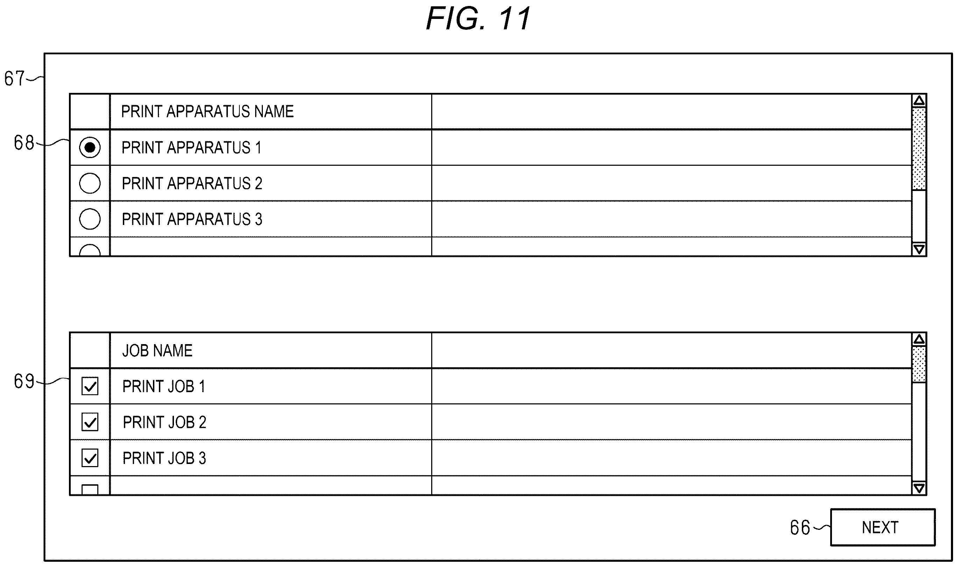

As shown in FIG. 11, the information processing apparatus 13 may be configured to cause the terminal apparatus 15 to display a distribution screen 67. When the transition button 66 is operated in a state where the print job is selected on the list screen 63, the information processing apparatus 13 causes the terminal apparatus 15 to display the distribution screen 67. The distribution screen 67 is a screen for setting a transmission destination of the print job. The distribution screen 67 is a screen for distributing the print job to the print apparatus 12.

An apparatus list field 68 may be displayed on the distribution screen 67. One or more print apparatuses 12 to which the information processing apparatus 13 can transmit the print job are displayed in the apparatus list field 68. The user selects one print apparatus 12 to be the transmission destination in the apparatus list field 68. The information processing apparatus 13 receives, via the distribution screen 67, one print apparatus 12 selected from the plurality of print apparatuses 12. The information processing apparatus 13 receives, as the transmission destination of the print job, one print apparatus 12 selected from the plurality of print apparatuses 12.

A job list field 69 is displayed on the distribution screen 67. In the job list field 69, one or more print jobs selected on the list screen 63 are displayed. The user selects, from the job list field 69, one or more print jobs to be collectively executed. The information processing apparatus 13 receives, via the distribution screen 67, one or more print jobs selected from the plurality of print jobs.

A transition button 66 is displayed on the distribution screen 67. When the transition button 66 is operated in a state where both the apparatus list field 68 and the job list field 69 are selected, the information processing apparatus 13 makes the transition of the display of the terminal apparatus 15 from the distribution screen 67 to another screen.

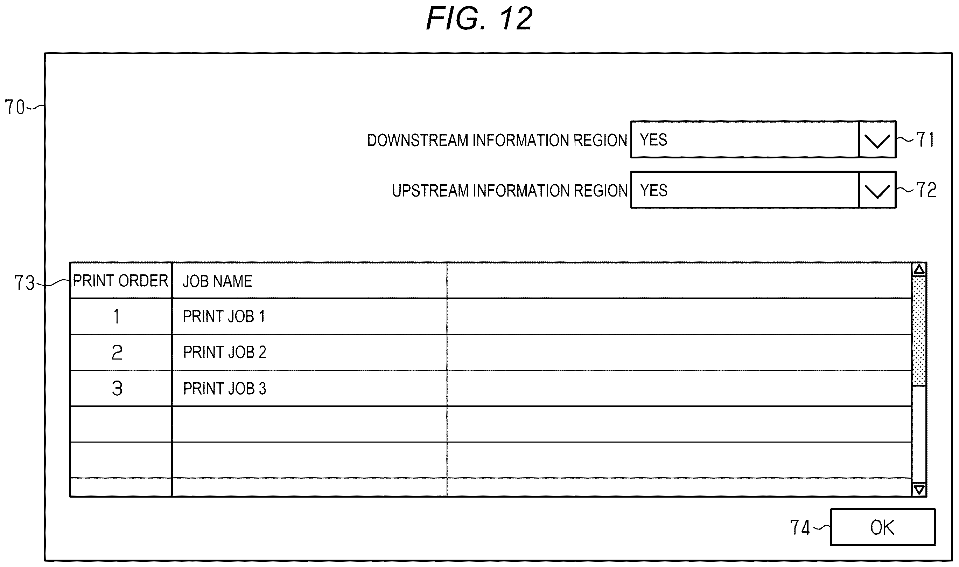

As shown in FIG. 12, the information processing apparatus 13 may be configured to cause the terminal apparatus 15 to display a setting screen 70. When the transition button 66 is operated on the distribution screen 67, the information processing apparatus 13 causes the terminal apparatus 15 to display the setting screen 70. The setting screen 70 is a screen for setting the information region E2. The setting screen 70 is a screen for attaching the information region E2 to the product region E1. The setting screen 70 may receive the setting of the information region E2 for each print job, or may collectively receive the setting of the information region E2 related to all the plurality of print jobs.

One or more setting fields are displayed on the setting screen 70. In one example, a downstream setting field 71 and an upstream setting field 72 are displayed on the setting screen 70. The downstream setting field 71 is a field for setting the downstream information region E2A. The upstream setting field 72 is a field for setting the upstream information region E2B. In the setting field, for example, whether to perform printing on the information region E2 is set. For example, when it is set not to perform printing on the information region E2 in the setting field, only the product region E1 is subjected to printing for the print job. The setting screen 70 may receive the setting of the remaining flag P1 for the character string A5. The setting screen 70 may receive the setting of the remaining flag P1 for each character string A5. The setting screen 70 may receive the setting of the alternative flag Q1 for the character string A5.

A print order display field 73 is displayed on the setting screen 70. In the print order display field 73, one or more print jobs that have been selected are displayed. The print order display field 73 indicates a print order of the print jobs. The setting screen 70 may receive a change in the print order in the print order display field 73.

The setting screen 70 may display a length of the label M1 consumed by printing based on the selected print job and the setting of the information region E2. Accordingly, the user can determine whether one or more print jobs to be collectively executed fit in the roll body R1.

A start button 74 is displayed on the setting screen 70. When the start button 74 is operated in a state where the information region E2 is set, the setting screen 70 is closed. The information processing apparatus 13 receives an operation of the start button 74 to transmit one or more print jobs to the print apparatus 12.

The information processing apparatus 13 may generate the product image data D1 based on the print data, the job data, or the like. The information processing apparatus 13 may generate the product image data D1 based on the print data, the job data, or the like that are to be transmitted to the print apparatus 12. For example, the information processing apparatus 13 may generate the product image data D1 based on an instruction received from the user. The information processing apparatus 13 may transmit the product image data D1 as a print job to the print apparatus 12.

The information processing apparatus 13 may generate the information image data D4 based on the print data, the job data, or the like. The information processing apparatus 13 may generate the information image data D4 based on the print data, the job data, or the like that are to be transmitted to the print apparatus 12. For example, the information processing apparatus 13 may generate the information image data D4 based on an instruction received from the user. The information processing apparatus 13 may generate the information image data D4 based on the setting received from the setting screen 70. The information processing apparatus 13 may transmit the information image data D4 as a print job to the print apparatus 12.

When generating the information image data D4, the information processing apparatus 13 may determine whether the character string A5 fits in the cut frame C1. The information processing apparatus 13 may determine whether the character string A5 in which the remaining flag P1 is set fits in the cut frame C1. When the character string A5 does not fit in the cut frame C1, the information processing apparatus 13 may notify the user that the character string A5 does not fit in the cut frame C1. For example, the information processing apparatus 13 may display a notification screen for notifying that the character string A5 does not fit in the cut frame C1. For example, the information processing apparatus 13 may display, on the setting screen 70, a message notifying that the character string A5 does not fit in the cut frame C1.

The information processing apparatus 13 may determine whether the character string A5 fits in the cut frame C1 based on the print job. For example, the information processing apparatus 13 may determine whether the character string A5 fits in the cut frame C1 based on the cut data D2 and the character string data D3. Specifically, the information processing apparatus 13 may determine whether the character string A5 indicated by the character string data D3 fits in the cut frame C1 indicated by the cut data D2. At this time, the information processing apparatus 13 may determine whether the character string A5 fits in the cut frame C1 with a predetermined size. The size of the character string A5 may be set in advance in the character string data D3 or may be separately set by the information processing apparatus 13. The information processing apparatus 13 may determine whether the character string A5 fits in the cut frame C1 with a size set in advance in the character string data D3.

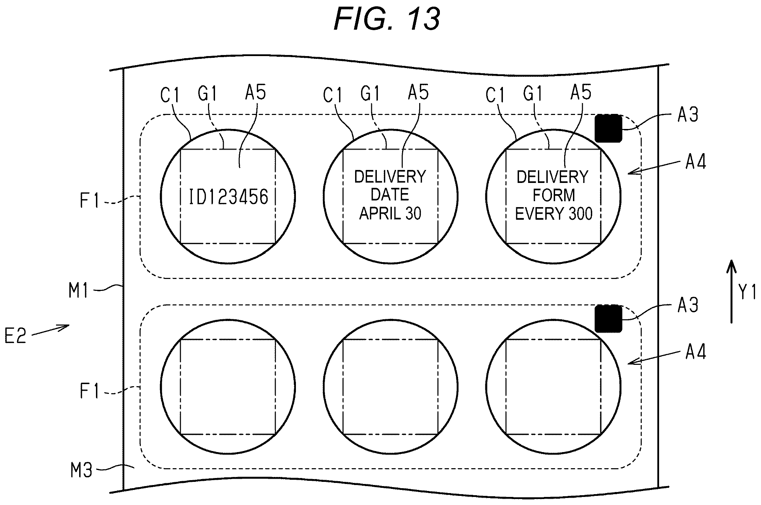

As shown in FIG. 13, the information processing apparatus 13 may determine whether the character string A5 fits in a print range G1 set in the cut frame C1. The print range G1 is a range in the cut frame C1 that can be subjected to printing by the print apparatus 12. Therefore, the print range G1 is a range smaller than the cut frame C1. The print range G1 is set based on the size, the shape, or the like of the cut frame C1. The print range G1 is, for example, a rectangular range. The print range G1 may be set in advance in the cut data D2. The print range G1 may be separately set by the information processing apparatus 13 based on the size, the shape, or the like of the cut frame C1 indicated by the cut data D2. The print range G1 is not limited to being set by the information processing apparatus 13, and may be set by the terminal apparatus 15, or may be set by the print apparatus 12. The information processing apparatus 13 may determine whether the character string A5 fits in the print range G1 with a size set in advance in the character string data D3.

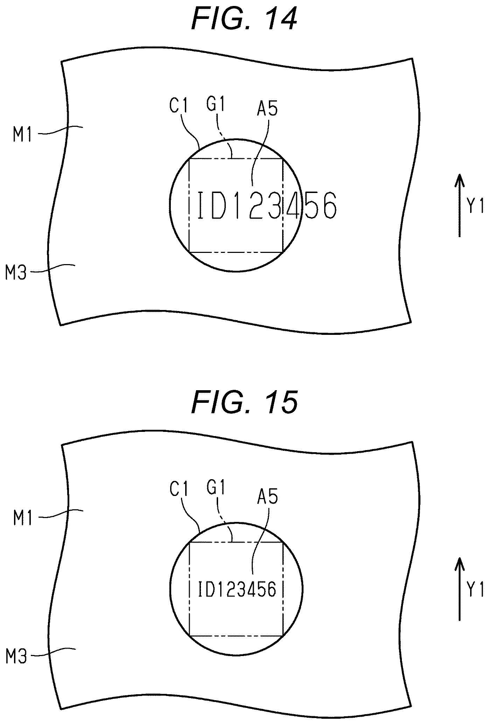

As shown in FIG. 14, when the information processing apparatus 13 generates the information image data D4, the character string A5 may not fit in the cut frame C1. For example, the character string A5 may not fit in the print range G1. In one example, the character string A5 may not fit in the print range G1 with the size set in advance in the character string data D3.

When the character string A5 does not fit in the cut frame C1, the information processing apparatus 13 changes the print form of the character string A5 such that the character string A5 fits in the cut frame C1. When the character string A5 does not fit in the print range G1, the information processing apparatus 13 may change the print form of the character string A5 such that the character string A5 fits in the print range G1. When the character string A5 does not fit in the cut frame C1, the information processing apparatus 13 may change, for the character string A5 having the remaining flag P1 indicating that the character string A5 needs to fit in the cut frame C1, the print form of the character string A5 such that the character string A5 fits in the cut frame C1.

As shown in FIG. 15, the information processing apparatus 13 may change the print form of the character string A5 by changing the size of the character string A5. That is, the information processing apparatus 13 may change the size of the character string A5 such that the character string A5 fits in the cut frame C1. Specifically, the information processing apparatus 13 may reduce the size of the character string A5 such that the character string A5 fits in the cut frame C1. The information processing apparatus 13 may change the size of the character string A5 such that the character string A5 fits in the print range G1.

When changing the size of the character string A5 such that the character string A5 fits in the cut frame C1, the information processing apparatus 13 may determine whether the size of the character string A5 is smaller than a predetermined size. For example, the information processing apparatus 13 may determine whether the size of the character string A5 is smaller than the predetermined size by comparing the size of the character string A5 that fits in the cut frame C1 with the predetermined size. When the size of the character string A5 is too small, it is difficult for the user to read the character string A5. Therefore, the information processing apparatus 13 may change the size of the character string A5 such that the size of the character string A5 is not smaller than the predetermined size.

When changing the size of the character string A5 such that the character string A5 fits in the cut frame C1, the information processing apparatus 13 may change the size of the character string A5 such that the sizes of the character strings A5 match in each information region E2. That is, the information processing apparatus 13 may change the size of the character string A5 such that the sizes of the character strings A5 match in the downstream information region E2A, and may change the size of the character string A5 such that the sizes of the character strings A5 match in the upstream information region E2B. For example, in the downstream information region E2A, when the size of the character string A5 needs to be reduced to fit the character string A5 in one cut frame C1 among a plurality of cut frames C1, the information processing apparatus 13 changes the sizes of other character strings A5 in accordance with the size of the character string A5. Accordingly, the user can easily visually recognize the character string A5.

When changing the size of the character string A5 such that the character string A5 fits in the cut frame C1, the information processing apparatus 13 may change the size of the character string A5 such that the sizes of the character strings A5 match in one print job. That is, the information processing apparatus 13 may change the size of the character string A5 such that the sizes of the character strings A5 match in the downstream information region E2A and the upstream information region E2B. For example, in the downstream information region E2A, when the size of the character string A5 needs to be reduced to fit the character string A5 in the cut frame C1, the information processing apparatus 13 changes the size of the character string A5 in the upstream information region E2B in accordance with the size of the character string A5 in the downstream information region E2A. Accordingly, the user can easily visually recognize the character string A5.

When changing the size of the character string A5 such that the character string A5 fits in the cut frame C1, the information processing apparatus 13 may change the size of the character string A5 such that the sizes of the character strings A5 match in a plurality of print jobs. When executing the plurality of print jobs, the information processing apparatus 13 may change the size of the character string A5 such that the sizes of the character strings A5 match. For example, the information processing apparatus 13 may change the size of the character string A5 such that the sizes of the character strings A5 match in the first print job J1 and the second print job J2. The information processing apparatus 13 may change the size of the character string A5 such that the sizes of the character strings A5 match in the first downstream information region E2A1, the first upstream information region E2B1, the second downstream information region E2A2, and the second upstream information region E2B2. Specifically, the information processing apparatus 13 determines whether the first character string A51 fits in the first cut frame based on the first print job J1. The information processing apparatus 13 determines whether the second character string A52 fits in the second cut frame based on the second print job J2. When the first character string A51 does not fit in the first cut frame or the second character string A52 does not fit in the second cut frame, the information processing apparatus 13 matches the size of the first character string A51 and the size of the second character string A52 such that the first character string A51 fits in the first cut frame and the second character string A52 fits in the second cut frame. Accordingly, the character string A5 in the first downstream information region E2A1, the character string A5 in the first upstream information region E2B1, the character string A5 in the second downstream information region E2A2, and the character string A5 in the second upstream information region E2B2 have the same size. Therefore, the user can easily visually recognize the character string A5. By matching the sizes of the character strings A5 in a plurality of print jobs, it is possible to match the sizes of the character strings A5 in one roll body R1.

When changing the size of the character string A5 such that the character string A5 fits in the cut frame C1, the information processing apparatus 13 may change the size of the character string A5 so as to match the size of the printed character string A5. For example, when performing, based on the second print job J2, printing on the second product region E12 and the second information region E22 in the label M1 in which the first product region E11 and the first information region E21 have been subjected to printing based on the first print job J1, the information processing apparatus 13 may change the size of the second character string A52 to match the size of the first character string A51. Specifically, when performing printing on the first information region E21 in the label M1 based on the first print job J1, the information processing apparatus 13 stores the size of the first character string A51. When performing printing on the second information region E22 in the label M1 based on the second print job J2, the information processing apparatus 13 refers to the size of the already printed first character string A51. The information processing apparatus 13 changes the size of the second character string A52 to match the size of the first character string A51. In this way, when changing the size of the character string A5 such that the character string A5 fits in the cut frame C1, the information processing apparatus 13 may store the size. In this case, when another print job is to be executed on the label M1 that has already been subjected to printing, the sizes of the character strings A5 match in a plurality of print jobs. Accordingly, the user can easily visually recognize the character string A5. By matching the sizes of the character strings A5 in a plurality of print jobs, it is possible to match the sizes of the character strings A5 in one roll body R1.

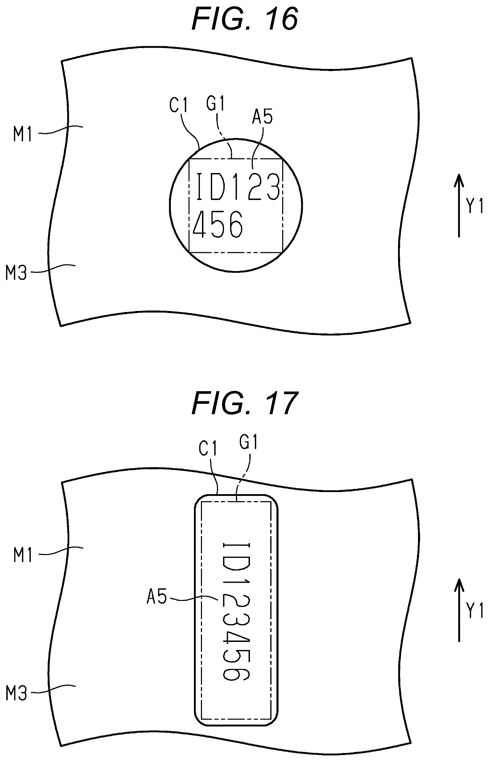

As shown in FIG. 16, the information processing apparatus 13 may change the print form of the character string A5 by changing the number of rows of the character string A5. That is, the information processing apparatus 13 may change the number of rows of the character string A5 such that the character string A5 fits in the cut frame C1. For example, the information processing apparatus 13 may increase the number of rows of the character string A5 such that the character string A5 fits in the cut frame C1. The information processing apparatus 13 may perform line feed on the character string A5 such that the character string A5 fits in the cut frame C1. The information processing apparatus 13 may reduce the number of rows of the character string A5 such that the character string A5 fits in the cut frame C1. The information processing apparatus 13 may change the number of rows of the character string A5 such that the character string A5 fits in the print range G1.

As shown in FIG. 17, the information processing apparatus 13 may change the print form of the character string A5 by changing the orientations of the character string A5. That is, the information processing apparatus 13 may change the orientation of the character string A5 such that the character string A5 fits in the cut frame C1. For example, when the character string A5 in a horizontal orientation does not fit in the cut frame C1, the information processing apparatus 13 may change the character string A5 into a vertical orientation. When the character string A5 in a vertical orientation does not fit in the cut frame C1, the information processing apparatus 13 may change the character string A5 into a horizontal orientation. The information processing apparatus 13 may change the orientation of the character string A5 such that the character string A5 fits in the print range G1.

The information processing apparatus 13 may change at least one of the size of the character string A5, the number of rows of the character string A5, and the orientation of the character string A5, so as to change the print form of the character string A5 such that the character string A5 fits in the cut frame C1. The information processing apparatus 13 may change the print form of the character string A5 such that the character string A5 fits in the cut frame C1 by combining the size change of the character string A5, the number of rows change of the character string A5, and the orientation change of the character string A5. For example, the information processing apparatus 13 may change the size of the character string A5 and the number of rows of the character string A5. The information processing apparatus 13 may change the number of rows of the character string A5 and the orientation of the character string A5. The information processing apparatus 13 may change the orientation of the character string A5 and the size of the character string A5. The information processing apparatus 13 may change the size of the character string A5, the number of rows of the character string A5, and the orientation of the character string A5.

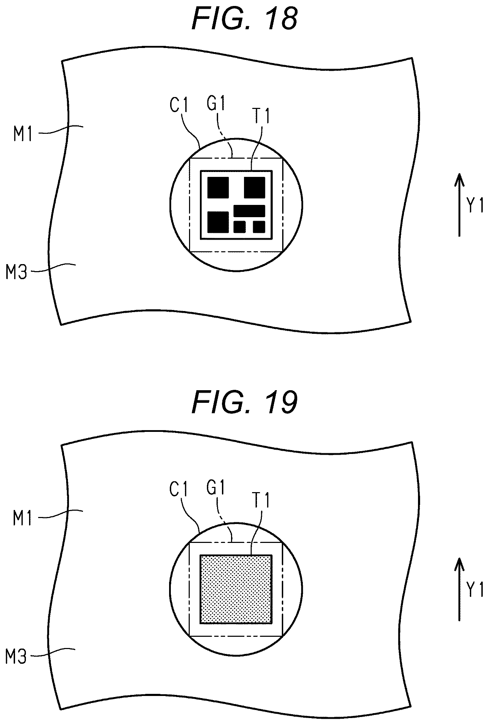

As shown in FIG. 18, the information processing apparatus 13 may change the print form of the character string A5 by replacing the character string A5 with an alternative symbol T1. When the character string A5 does not fit in the cut frame C1, the information processing apparatus 13 may replace the character string A5 with the alternative symbol T1. When the character string A5 does not fit in the cut frame C1 even when any of the size of the character string A5, the number of rows of the character string A5, and the orientation of the character string A5 is changed, the information processing apparatus 13 may replace the character string A5 with the alternative symbol T1. That is, when the character string A5 does not fit in the cut frame C1 even when at least one of the size of the character string A5, the number of rows of the character string A5, and the orientation of the character string A5 is changed, the information processing apparatus 13 may replace the character string A5 with the alternative symbol T1. When changing the size of the character string A5 such that the character string A5 fits in the cut frame C1, the information processing apparatus 13 may replace the character string A5 with the alternative symbol T1 once the size of the character string A5 is smaller than a predetermined size. In this case, the alternative symbol T1 is printed instead of the character string A5. Specifically, when the character string A5 does not fit in the cut frame C1, the alternative symbol T1 is printed so as to fit in the cut frame C1.

The alternative symbol T1 is a symbol indicating the character string A5. The alternative symbol T1 is a symbol as an alternative for the character string A5. The alternative symbol T1 is a symbol corresponding to the character string A5. The alternative symbol T1 may be set in the character string data D3 in advance, or may be separately set in the character string data D3 by the information processing apparatus 13. The alternative symbol T1 may be set for each character string A5, or a common alternative symbol T1 may be set for a plurality of character strings A5.

The information processing apparatus 13 may replace the character string A5 with the alternative symbol T1 based on the print job. For example, the information processing apparatus 13 may replace the character string A5 with the alternative symbol T1 based on the character string data D3. The information processing apparatus 13 may use, as an alternative for the character string A5, the alternative symbol T1 set in the character string data D3, or may convert the character string A5 into the alternative symbol T1 based on an algorithm set in the character string data D3.

The alternative symbol T1 may include a two-dimensional code. The alternative symbol T1 may be a symbol in which the character string A5 is expressed by a two-dimensional code, or may be a symbol in which a link destination indicating information of the character string A5 is expressed by a two-dimensional code. The user figures out a content of the character string A5 from the alternative symbol T1 by analyzing the two-dimensional code. The information processing apparatus 13 may replace the character string A5 with a two-dimensional code set in the character string data D3, or may convert the character string A5 into a two-dimensional code.

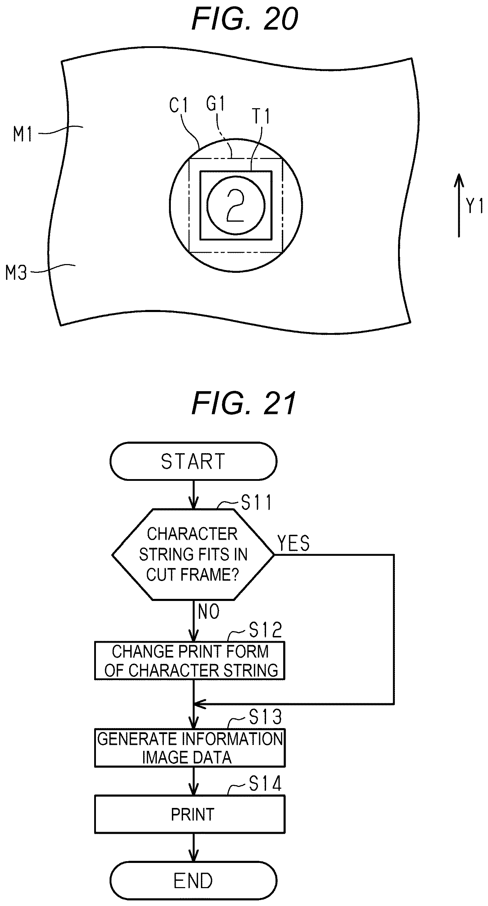

As shown in FIGS. 19 and 20, the alternative symbol T1 may include a mark. The alternative symbol T1 may be a mark indicating a specific color or a mark indicating a specific numerical value. In the example shown in FIG. 19, the alternative symbol T1 indicates a specific color. In the example shown in FIG. 20, the alternative symbol T1 indicates a specific numerical value. For example, the user figures out the content of the character string A5 from the alternative symbol T1 by checking a correspondence table indicating a correspondence relationship between the mark and the character string A5. The information processing apparatus 13 may replace the character string A5 with a mark set in the character string data D3.

Instead of the information processing apparatus 13 generating the product image data D1, the print apparatus 12 may generate the product image data D1. That is, the print apparatus 12 may generate the product image data D1 based on the print data, the job data, or the like. Instead of the information processing apparatus 13 generating the information image data D4, the print apparatus 12 may generate the information image data D4. That is, the print apparatus 12 may generate the information image data D4 based on the print data, the job data, or the like. The print apparatus 12 may perform printing on the label M1 based on the generated product image data D1 and information image data D4.

Instead of the information processing apparatus 13 determining whether the character string A5 fits in the cut frame C1, the print apparatus 12 may determine whether the character string A5 fits in the cut frame C1. That is, when generating the information image data D4, the print apparatus 12 may determine whether the character string A5 fits in the cut frame C1. The print apparatus 12 may determine whether the character string A5 fits in the print range G1. The print apparatus 12 may determine whether the character string A5 in which the remaining flag P1 is set fits in the cut frame C1. When the character string A5 does not fit in the cut frame C1, the print apparatus 12 may notify the user that the character string A5 does not fit in the cut frame C1. For example, the print apparatus 12 may display a notification screen for notifying that the character string A5 does not fit in the cut frame C1.

Instead of the information processing apparatus 13 changing the print format of the character string A5, the print apparatus 12 may change the print format of the character string A5. That is, when the character string A5 does not fit in the cut frame C1, the print apparatus 12 may change the print form of the character string A5 so as to fit in the cut frame C1. The print apparatus 12 may change the size of the character string A5, the number of rows of the character string A5, the orientation of the character string A5, or replace the character string A5 with the alternative symbol T1 such that the character string A5 fits in the cut frame C1. When the character string A5 does not fit in the print range G1, the print apparatus 12 may change the print form of the character string A5 so as to fit in the print range G1.

Instead of the information processing apparatus 13, the print apparatus 12 may change the size of the character string A5 such that the sizes of the character strings A5 match in each information region E2. The print apparatus 12 may change the size of the character string A5 such that the sizes of the character strings A5 match in the downstream information region E2A, and may change the size of the character string A5 such that the sizes of the character strings A5 match in the upstream information region E2B. In the downstream information region E2A, when the size of the character string A5 needs to be reduced to fit the character string A5 in one cut frame C1 among a plurality of cut frames C1, the print apparatus 12 may change the sizes of other character strings A5 in accordance with the size of the character string A5.

Instead of the information processing apparatus 13, the print apparatus 12 may change the size of the character string A5 such that the sizes of the character strings A5 match in the first print job J1 and the second print job J2. The print apparatus 12 may change the size of the character string A5 such that the sizes of the character strings A5 match in the first print job J1 and the second print job J2. The print apparatus 12 may change the size of the character string A5 such that the sizes of the character strings A5 match in the first downstream information region E2A1, the first upstream information region E2B1, the second downstream information region E2A2, and the second upstream information region E2B2.

Instead of the information processing apparatus 13, the print apparatus 12 may change the size of the second character string A52 to match the size of the first character string A51 when executing the second print job J2 on the label M1 on which the first print job J1 has been executed. When performing printing on the first information region E21 in the label M1 based on the first print job J1, the print apparatus 12 may store the size of the first character string A51. When performing printing on the second information region E22 in the label M1 based on the second print job J2, the print apparatus 12 may refer to the size of the already printed first character string A51. The print apparatus 12 may change the size of the second character string A52 to match the size of the first character string A51.

Instead of the information processing apparatus 13 changing the print format of the character string A5, the terminal apparatus 15 may change the print format of the character string A5. That is, when the character string A5 does not fit in the cut frame C1, the terminal apparatus 15 may change the print form of the character string A5 so as to fit in the cut frame C1. The terminal apparatus 15 may change the size of the character string A5, the number of rows of the character string A5, the orientation of the character string A5, or replace the character string A5 with the alternative symbol T1 such that the character string A5 fits in the cut frame C1. When the character string A5 does not fit in the print range G1, the terminal apparatus 15 may change the print form of the character string A5 so as to fit in the print range G1.

### Print Processing

Next, print processing will be described. The print processing is processing of printing an image based on a print job. The print processing is executed by the print system 11. The print processing is executed by, for example, the processing control unit 22, the print control unit 32, and the information control unit 61. The print processing indicates a printing method in which the computer controls the print apparatus 12. The print processing indicates a program that causes a computer to control the print apparatus 12. The print processing is executed, for example, when the print system 11 receives a transmission instruction from the user.

As shown in FIG. 21, in step S11, the print system 11 determines whether the character string A5 fits in the cut frame C1 based on the print job. When the character string A5 fits in the cut frame C1, the print system 11 shifts the processing to step S13. When the character string A5 does not fit in the cut frame C1, the print system 11 shifts the processing to step S12.

In step S12, the print system 11 changes the print form of the character string A5. The print system 11 changes the print form of the character string A5 such that the character string A5 fits in the cut frame C1. The print system 11 may change the size of the character string A5. The print system 11 may change the number of rows of the character string A5. The print system 11 may change the orientation of the character string A5. The print system 11 may replace the character string A5 with the alternative symbol T1. The print system 11 may combine the size change of the character string A5, the number of rows change of the character string A5, and the orientation change of the character string A5. When the character string A5 does not fit in the cut frame C1 even when any of the size of the character string A5, the number of rows of the character string A5, and the orientation of the character string A5 is changed, the print system 11 may replace the character string A5 with the alternative symbol T1. When the size of the character string A5 changed to fit in the cut frame C1 is smaller than a predetermined size, the print system 11 may replace the character string A5 with the alternative symbol T1. The print system 11 may change the size of the character string A5 such that the sizes of the character strings A5 match in each information region E2. The print system 11 may change the size of the character string A5 such that the sizes of the character strings A5 match in a plurality of print jobs. The print system 11 may change the size of the character string A5 so as to match the size of the printed character string A5. The print system 11 changes the print form of the character string A5 according to a predetermined algorithm.

In step S13, the print system 11 generates the information image data D4. The print system 11 generates the information image data D4 based on the cut data D2, the character string data D3, or the like. The print system 11 generates the information image data D4 such that the character string A5 fits in the cut frame C1. At this time, the print system 11 may generate the product image data D1 together with the information image data D4. The print system 11 may separately generate the product image data D1.

In step S14, the print system 11 prints an image on the label M1 based on the print job. The print system 11 prints the product image A1 indicated by the product image data D1 and the information image A4 indicated by the information image data D4 on the label M1. Accordingly, the print system 11 performs printing the product region E1 and the information region E2 in the label M1. When step S14 ends, the print system 11 ends the print processing.

### Actions and Effects of Embodiment

Next, actions and effects of the above embodiment will be described.
(1) The print system 11 determines whether the character string A5 fits in the cut frame C1 based on the print job. When the character string A5 does not fit in the cut frame C1, the print system 11 changes the print form of the character string A5 so as to fit in the cut frame C1. According to the above configuration, the character string A5 fits in the cut frame C1 without increasing the area of the information region E2. Therefore, a consumption amount of the label M1 is reduced.
(2) The print system 11 determines whether the character string A5 fits in the print range G1 set in the cut frame C1. When the character string A5 does not fit in the print range G1, the print system 11 changes the print form of the character string A5 so as to fit in the print range G1. For example, when the cut frame C1 has a complicated shape, it may be difficult for the user to visually recognize the character string A5 by simply fitting the character string A5 in the cut frame C1. According to the above configuration, since the character string A5 fits in the print range G1, the user can easily visually recognize the character string A5.
(3) When the character string A5 does not fit in the cut frame C1, the print system 11 changes the size of the character string A5 so as to fit in the cut frame C1. According to the above configuration, the character string A5 easily fits in the cut frame C1.
(4) The print system 11 may change the size of the character string A5 such that the sizes of the character strings A5 match in the downstream information region E2A, and may change the size of the character string A5 such that the sizes of the character strings A5 match in the upstream information region E2B. According to the above configuration, since the sizes of the character strings A5 match in each information region E2, the user can easily visually recognize the character string A5.
(5) The print system 11 changes the size of the character string A5 such that the sizes of the character strings A5 match in the downstream information region E2A and the upstream information region E2B. According to the above configuration, since the sizes of the character strings A5 match in the downstream information region E2A and the upstream information region E2B, the user can easily visually recognize the character string A5.
(6) The print system 11 determines whether the first character string A51 fits in the first cut frame based on the first print job J1. The print system 11 determines whether the second character string A52 fits in the second cut frame based on the second print job J2. When the first character string A51 does not fit in the first cut frame or the second character string A52 does not fit in the second cut frame, the print system 11 matches the size of the first character string A51 and the size of the second character string A52 such that the first character string A51 fits in the first cut frame and the second character string A52 fits in the second cut frame. According to the above configuration, since the sizes of the character strings A5 match in the first print job J1 and the second print job J2, the user can easily visually recognize the character string A5.
(7) When performing, based on the second print job J2, printing on the second product region E12 and the second information region E22 in the label M1 in which the first product region E11 and the first information region E21 have been subjected to printing based on the first print job J1, the print system 11 changes the size of the second character string A52 to match the size of the first character string A51. According to the above configuration, since the sizes of the character strings A5 match in the first print job J1 and the second print job J2, the user can easily visually recognize the character string A5.
(8) When the character string A5 does not fit in the cut frame C1, the print system 11 changes the number of rows of the character string A5 so as to fit in the cut frame C1. According to the above configuration, the character string A5 easily fits in the cut frame C1.
(9) When the character string A5 does not fit in the cut frame C1, the print system 11 changes the orientation of the character string A5 so as to fit in the cut frame C1. According to the above configuration, the character string A5 easily fits in the cut frame C1.
(10) When the character string A5 does not fit in the cut frame C1, the print system 11 changes at least one of the size of the character string A5, the number of rows of the character string A5, and the orientation of the character string A5, so as to change the print form of the character string A5 such that the character string A5 fits in the cut frame C1. According to the above configuration, the character string A5 easily fits in the cut frame C1.
(11) When the character string A5 does not fit in the cut frame C1 even when any of the size of the character string A5, the number of rows of the character string A5, and the orientation of the character string A5 is changed, the print system 11 replaces the character string A5 with the alternative symbol T1. According to the above configuration, the alternative symbol T1 indicating the character string A5 fits in the cut frame C1.
(12) The alternative symbol T1 includes a two-dimensional code or a mark. According to the above configuration, the user can easily visually recognize the alternative symbol T1.
(13) The print system 11 replaces the character string A5 with the alternative symbol T1 based on the print job. According to the above configuration, the character string A5 is replaced with any alternative symbol T1 based on the print job.
(14) When the character string A5 does not fit in the cut frame C1, the print system 11 replaces the character string A5 with the alternative symbol T1. According to the above configuration, the alternative symbol T1 indicating the character string A5 fits in the cut frame C1.
(15) When the character string A5 does not fit in the cut frame C1, the print system 11 changes, for the character string A5 whose remaining flag P1 indicates that the character string A5 needs to fit in the cut frame C1, the print form of the character string A5 such that the character string A5 fits in the cut frame C1. According to the above configuration, there is no risk of changing the print form of the character string A5 that does not need to fit in the cut frame C1. Therefore, a processing speed of the print system 11 is improved.

### Technical Ideas

Hereinafter, technical ideas figured out from the embodiment and the modifications described above, and the actions and effects thereof will be described.
(A) A print system includes: a print apparatus configured to print an image on a label having a mount and a sticker sheet attached to the mount; and an information processing apparatus configured to process information related to the print apparatus, in which the print apparatus includes a conveying portion configured to convey the label in a conveying direction, a print unit configured to print an image on the label, and a print control unit configured to control the print unit based on a print job, a product region is subjected to printing by printing a product image on the label based on the print job, an information region is subjected to printing to be aligned with the product region in the conveying direction by printing a character string on the label based on the print job, the information processing apparatus includes an information control unit configured to transmit the print job to the print apparatus, the print job includes product image data indicating the product image, cut data indicating a cut frame indicating a position of a notch formed in the label, and character string data indicating the character string, and the print control unit or the information control unit determines whether the character string fits in the cut frame based on the print job, and when the character string does not fit in the cut frame, changes a print form of the character string so as to fit in the cut frame. According to the above configuration, the character string fits in the cut frame without increasing the area of the information region. Therefore, a consumption amount of the label is reduced.
(B) In the print system, the print control unit or the information control unit may determine whether the character string fits in a print range set in the cut frame, and when the character string does not fit in the print range, change the print form of the character string so as to fit in the print range. For example, when the cut frame has a complicated shape, it may be difficult for a user to visually recognize the character string by simply fitting the character string in the cut frame. According to the above configuration, since the character string fits in the print range, the user can easily visually recognize the character string.
(C) In the print system, when the character string does not fit in the cut frame, the print control unit or the information control unit may change a size of the character string so as to fit in the cut frame. According to the above configuration, the character string easily fits in the cut frame.
(D) In the print system, the information region may include a downstream information region located downstream of the product region in the conveying direction and an upstream information region located upstream of the product region in the conveying direction, and the print control unit or the information control unit may change the size of the character string so as to match a size of the character string in the downstream information region, and changes the size of the character string so as to match a size of the character string in the upstream information region. According to the above configuration, since the sizes of the character strings match in each information region, the user can easily visually recognize the character string.
(E) In the print system, the information region may include a downstream information region located downstream of the product region in the conveying direction and an upstream information region located upstream of the product region in the conveying direction, and the print control unit or the information control unit may change the size of the character string such that sizes of the character strings match in the downstream information region and the upstream information region. According to the above configuration, since the sizes of the character strings match in the downstream information region and the upstream information region, the user can easily visually recognize the character string.
(F) In the print system, the print job may be a first print job, the product region may be a first product region, the information region may be a first information region, the product image may be a first product image, the cut frame may be a first cut frame, the character string may be a first character string, the product image data may be first product image data indicating the first product image, the cut data may be first cut data indicating the first cut frame, the character string data may be first character string data indicating the first character string, the print apparatus may form a second product region by printing a second product image on the label based on a second print job, and form a second information region to be aligned with the second product region in the conveying direction by printing a second character string on the label based on the second print job, the second print job may include second product image data indicating the second product image, second cut data indicating a second cut frame indicating a position of a notch formed in the label, and second character string data indicating the second character string, and the print control unit or the information control unit may determine whether the first character string fits in the first cut frame based on the first print job, determine whether the second character string fits in the second cut frame based on the second print job, and when the first character string does not fit in the first cut frame or the second character string does not fit in the second cut frame, match a size of the first character string and a size of the second character string such that the first character string fits in the first cut frame and the second character string fits in the second cut frame. According to the above configuration, since the sizes of the character strings match in the first print job and the second print job, the user can easily visually recognize the character string.
(G) In the print system, the print job may be a first print job, the product region may be a first product region, the information region may be a first information region, the product image may be a first product image, the cut frame may be a first cut frame, the character string may be a first character string, the product image data may be first product image data indicating the first product image, the cut data may be first cut data indicating the first cut frame, the character string data may be first character string data indicating the first character string, the print apparatus may form a second product region by printing a second product image on the label based on a second print job, and form a second information region to be aligned with the second product region in the conveying direction by printing a second character string on the label based on the second print job, the second print job may include second product image data indicating the second product image, second cut data indicating a second cut frame indicating a position of a notch formed in the label, and second character string data indicating the second character string, and when performing, based on the second print job, printing on the second product region and the second information region in the label in which the first product region and the first information region have been subjected to printing based on the first print job, the print control unit or the information control unit may change a size of the second character string to match a size of the first character string. According to the above configuration, since the sizes of the character strings match in the first print job and the second print job, the user can easily visually recognize the character string.
(H) In the print system, when the character string does not fit in the cut frame, the print control unit or the information control unit may change a number of rows of the character string so as to fit in the cut frame. According to the above configuration, the character string easily fits in the cut frame.
(I) In the print system, when the character string does not fit in the cut frame, the print control unit or the information control unit may change an orientation of the character string so as to fit in the cut frame. According to the above configuration, the character string easily fits in the cut frame.
(J) In the print system, when the character string does not fit in the cut frame, the print control unit or the information control unit may change at least one of a size of the character string, a number of rows of the character string, and an orientation of the character string, so as to change the print form of the character string such that the character string fits in the cut frame. According to the above configuration, the character string easily fits in the cut frame.
(K) In the print system, the print control unit or the information control unit may replace the character string with an alternative symbol when the character string does not fit in the cut frame even when any of the size of the character string, the number of rows of the character string, and the orientation of the character string is changed. According to the above configuration, the alternative symbol indicating the character string fits in the cut frame.
(L) In the print system, the alternative symbol may include a two-dimensional code or a mark. According to the above configuration, the user can easily visually recognize the alternative symbol.
(M) In the print system, the print control unit or the information control unit may replace the character string with the alternative symbol based on the print job. According to the above configuration, the character string is replaced with any alternative symbol based on the print job.
(N) In the print system, the print control unit or the information control unit may replace the character string with an alternative symbol when the character string does not fit in the cut frame. According to the above configuration, the alternative symbol indicating the character string fits in the cut frame.
(O) In the print system, the alternative symbol may include a two-dimensional code or a mark. According to the above configuration, the user can easily visually recognize the alternative symbol.
(P) In the print system, the print control unit or the information control unit may use the alternative symbol as an alternative for the character string based on the print job. According to the above configuration, any alternative symbol can be used as an alternative for the character string.
(Q) In the print system, the print job may include a remaining flag indicating whether the character string needs to fit in the cut frame, and when the character string does not fit in the cut frame, the print control unit or the information control unit may change, for the character string having the remaining flag indicating that the character string needs to fit in the cut frame, the print form of the character string such that the character string fits in the cut frame. According to the above configuration, there is no risk of changing the print form of the character string that does not need to fit in the cut frame. Therefore, a processing speed of the print system is improved.
(R) A print apparatus for printing an image on a label having a mount and a sticker sheet attached to the mount, the print apparatus includes: a conveying portion configured to convey the label in a conveying direction; a print unit configured to print an image on the label; and a print control unit configured to control the print unit based on a print job, in which a product region is subjected to printing by printing a product image on the label based on the print job, an information region is subjected to printing to be aligned with the product region in the conveying direction by printing a character string on the label based on the print job, the print job includes product image data indicating the product image, cut data indicating a cut frame indicating a position of a notch formed in the label, and character string data indicating the character string, and the print control unit determines whether the character string fits in the cut frame based on the print job, and when the character string does not fit in the cut frame, changes a print form of the character string so as to fit in the cut frame. According to the above configuration, the same effects as those of the print system described above can be obtained.
(S) A printing method performed by controlling, by a computer, a print apparatus for performing printing on a product region by printing, based on a print job, a product image on a label having a mount and a sticker sheet attached to the mount, and for performing printing on an information region to be aligned with the product region in a conveying direction of the label by printing a character string based on the print job, the print job including product image data indicating the product image, cut data indicating a cut frame indicating a position of a notch formed in the label, and character string data indicating the character string, the printing method includes: determining, by the computer, whether the character string fits in the cut frame based on the print job; and changing, by the computer, a print form of the character string so as to fit in the cut frame when the character string does not fit in the cut frame. According to the above method, the same effects as those of the print system described above can be obtained.
(T) A non-transitory computer-readable storage medium storing a program causing a computer to control a print apparatus for performing printing on a product region by printing, based on a print job, a product image on a label having a mount and a sticker sheet attached to the mount, and for performing printing on an information region to be aligned with the product region in a conveying direction of the label by printing a character string based on the print job, the print job including product image data indicating the product image, cut data indicating a cut frame indicating a position of a notch formed in the label, and character string data indicating the character string, the non-transitory computer-readable storage medium storing a program may cause the computer to: determine whether the character string fits in the cut frame based on the print job; and change a print form of the character string so as to fit in the cut frame when the character string does not fit in the cut frame. According to the above non-transitory computer-readable storage medium storing a program, the same effects as those of the print system described above can be obtained.

## Claims

1. A print system comprising:
a print apparatus configured to print an image on a label having a mount and a sticker sheet attached to the mount; and
an information processing apparatus configured to process information related to the print apparatus, wherein
the print apparatus includes a conveying portion configured to convey the label in a conveying direction, a print unit configured to print an image on the label, and a print control unit configured to control the print unit based on a print job,
a product region is subjected to printing by printing a product image on the label based on the print job,
an information region is subjected to printing to be aligned with the product region in the conveying direction by printing a character string on the label based on the print job,
the information processing apparatus includes an information control unit configured to transmit the print job to the print apparatus,
the print job includes product image data indicating the product image, cut data indicating a cut frame indicating a position of a notch formed in the label, and character string data indicating the character string, and
the print control unit or the information control unit determines whether the character string fits in the cut frame based on the print job, and when the character string does not fit in the cut frame, changes a print form of the character string so as to fit in the cut frame.

2. The print system according to claim 1, wherein
the print control unit or the information control unit determines whether the character string fits in a print range set in the cut frame, and when the character string does not fit in the print range, changes the print form of the character string so as to fit in the print range.

3. The print system according to claim 1, wherein when the character string does not fit in the cut frame, the print control unit or the information control unit changes a size of the character string so as to fit in the cut frame.

4. The print system according to claim 3, wherein
the information region includes a downstream information region located downstream of the product region in the conveying direction and an upstream information region located upstream of the product region in the conveying direction, and
the print control unit or the information control unit changes the size of the character string so as to match a size of the character string in the downstream information region, and changes the size of the character string so as to match a size of the character string in the upstream information region.

5. The print system according to claim 3, wherein
the information region includes a downstream information region located downstream of the product region in the conveying direction and an upstream information region located upstream of the product region in the conveying direction, and
the print control unit or the information control unit changes the size of the character string such that sizes of the character strings match in the downstream information region and the upstream information region.

6. The print system according to claim 3, wherein
the print job is a first print job,
the product region is a first product region,
the information region is a first information region,
the product image is a first product image,
the cut frame is a first cut frame,
the character string is a first character string,
the product image data is first product image data indicating the first product image,
the cut data is first cut data indicating the first cut frame,
the character string data is first character string data indicating the first character string,
the print apparatus forms a second product region by printing a second product image on the label based on a second print job, and forms a second information region to be aligned with the second product region in the conveying direction by printing a second character string on the label based on the second print job,
the second print job includes second product image data indicating the second product image, second cut data indicating a second cut frame indicating a position of a notch formed in the label, and second character string data indicating the second character string, and
the print control unit or the information control unit determines whether the first character string fits in the first cut frame based on the first print job, determines whether the second character string fits in the second cut frame based on the second print job, and when the first character string does not fit in the first cut frame or the second character string does not fit in the second cut frame, matches a size of the first character string and a size of the second character string such that the first character string fits in the first cut frame and the second character string fits in the second cut frame.

7. The print system according to claim 3, wherein
the print job is a first print job,
the product region is a first product region,
the information region is a first information region,
the product image is a first product image,
the cut frame is a first cut frame,
the character string is a first character string,
the product image data is first product image data indicating the first product image,
the cut data is first cut data indicating the first cut frame,
the character string data is first character string data indicating the first character string,
the print apparatus forms a second product region by printing a second product image on the label based on a second print job, and forms a second information region to be aligned with the second product region in the conveying direction by printing a second character string on the label based on the second print job,
the second print job includes second product image data indicating the second product image, second cut data indicating a second cut frame indicating a position of a notch formed in the label, and second character string data indicating the second character string, and
when performing, based on the second print job, printing on the second product region and the second information region in the label in which the first product region and the first information region have been subjected to printing based on the first print job, the print control unit or the information control unit changes a size of the second character string to match a size of the first character string.

8. The print system according to claim 1, wherein when the character string does not fit in the cut frame, the print control unit or the information control unit changes a number of rows of the character string so as to fit in the cut frame.

9. The print system according to claim 1, wherein when the character string does not fit in the cut frame, the print control unit or the information control unit changes an orientation of the character string so as to fit in the cut frame.

10. The print system according to claim 1, wherein, when the character string does not fit in the cut frame, the print control unit or the information control unit changes at least one of a size of the character string, a number of rows of the character string, and an orientation of the character string, so as to change the print form of the character string such that the character string fits in the cut frame.

11. The print system according to claim 10, wherein the print control unit or the information control unit replaces the character string with an alternative symbol when the character string does not fit in the cut frame even when any of the size of the character string, the number of rows of the character string, and the orientation of the character string is changed.

12. The print system according to claim 11, wherein the alternative symbol includes a two-dimensional code or a mark.

13. The print system according to claim 12, wherein the print control unit or the information control unit replaces the character string with the alternative symbol based on the print job.

14. The print system according to claim 1, wherein the print control unit or the information control unit replaces the character string with an alternative symbol when the character string does not fit in the cut frame.

15. The print system according to claim 14, wherein the alternative symbol includes a two-dimensional code or a mark.

16. The print system according to claim 15, wherein the print control unit or the information control unit uses the alternative symbol as an alternative for the character string based on the print job.

17. The print system according to claim 1, wherein
the print job includes a remaining flag indicating whether the character string needs to fit in the cut frame, and
when the character string does not fit in the cut frame, the print control unit or the information control unit changes, for the character string having the remaining flag indicating that the character string needs to fit in the cut frame, the print form of the character string such that the character string fits in the cut frame.

18. A print apparatus for printing an image on a label having a mount and a sticker sheet attached to the mount, the print apparatus comprising:
a conveying portion configured to convey the label in a conveying direction;
a print unit configured to print an image on the label; and
a print control unit configured to control the print unit based on a print job, wherein
a product region is subjected to printing by printing a product image on the label based on the print job,
an information region is subjected to printing to be aligned with the product region in the conveying direction by printing a character string on the label based on the print job,
the print job includes product image data indicating the product image, cut data indicating a cut frame indicating a position of a notch formed in the label, and character string data indicating the character string, and
the print control unit determines whether the character string fits in the cut frame based on the print job, and when the character string does not fit in the cut frame, changes a print form of the character string so as to fit in the cut frame.

19. A printing method performed by controlling, by a computer, a print apparatus for performing printing on a product region by printing, based on a print job, a product image on a label having a mount and a sticker sheet attached to the mount, and for performing printing on an information region to be aligned with the product region in a conveying direction of the label by printing a character string based on the print job,
the print job including product image data indicating the product image, cut data indicating a cut frame indicating a position of a notch formed in the label, and character string data indicating the character string, the printing method comprising:
determining, by the computer, whether the character string fits in the cut frame based on the print job; and
changing, by the computer, a print form of the character string so as to fit in the cut frame when the character string does not fit in the cut frame.

20. A non-transitory computer-readable storage medium storing a program causing a computer to control a print apparatus for performing printing on a product region by printing, based on a print job, a product image on a label having a mount and a sticker sheet attached to the mount, and for performing printing on an information region to be aligned with the product region in a conveying direction of the label by printing a character string based on the print job,
the print job including product image data indicating the product image, cut data indicating a cut frame indicating a position of a notch formed in the label, and character string data indicating the character string, the non-transitory computer-readable storage medium storing a program causing the computer to:
determine whether the character string fits in the cut frame based on the print job; and
change a print form of the character string so as to fit in the cut frame when the character string does not fit in the cut frame.
